# EUROPÄISCHE PATENTSCHRIFT

(11) **EP 3 801 949 B1**
(45) Veröffentlichungstag und Bekanntmachung des Hinweises auf die Patenterteilung: **14.02.2024**
(21) Anmeldenummer: 19724812.3
(22) Anmeldetag: 15.05.2019
(51) Int. Cl.: B22C 3/00, B22C 9/02

(54) **SCHLICHTEZUSAMMENSETZUNG, VERFAHREN ZUR BESCHICHTUNG EINER GIESSFORM UND VERWENDUNG DER SCHLICHTEZUSAMMENSETZUNG ZUR BESCHICHTUNG EINER GIESSFORM**
COATING COMPOSITION, PROCESS FOR COATING A CASTING MOLD AND USE OF THE COATING COMPOSITION FOR COATING A CASTING MOLD
COMPOSITION DE POTEYAGE, PROCÉDÉ DE REVÊTEMENT D'UN MOULE DE COULÉE ET UTILISATION DE LA COMPOSITION DE POTEYAGE POUR LE REVÊTEMENT D'UN MOULE DE COULÉE

(30) Priorität: 25.05.2018 DE 102018004234
(43) Veröffentlichungstag der Anmeldung: 14.04.2021
(60) Teilanmeldung: 22199457.7
(73) Patentinhaber: ASK Chemicals GmbH, 40721 Hilden (DE)
(72) Erfinder: STÖTZEL, Reinhard, 42699 Solingen (DE); KOCH, Christian, 47443 Moers (DE); KOWALCZYK, Anne, 76187 Karlsruhe (DE)
(74) Vertreter: Vossius & Partner Patentanwälte Rechtsanwälte mbB
(86) Internationale Anmeldenummer: PCT/EP2019/062480
(87) Internationale Veröffentlichungsnummer: WO 2019/224070

(56) Entgegenhaltungen:
- DE-A1-102005 024 207
- US-A- 1 990 075
- US-A- 3 243 397
- US-B2- 7 749 933
- N.N. :: "Kärlicher Blauton gelbbrenned", , 17 November 2021 (2021-11-17), pages 1-2, XP055862364, Retrieved from the Internet: URL:https://kts-kg.de/wp-content/uploads/2 014/03/T-7001-3_de-Blautone.pdf [retrieved on 2021-11-17]

## Beschreibung

### Technisches Gebiet

Die vorliegende Erfindung betrifft eine Schlichtezusammensetzung, umfassend eine Feststoffkomponente, die einen Ton und Glimmer umfasst. Ferner werden ein Verfahren zur Beschichtung einer Gießform und die Verwendung der Schlichtezusammensetzung zur Beschichtung einer Gießform offenbart.

### Stand der Technik

Die meisten Erzeugnisse der Eisen-, Stahl- sowie der Nichteisenmetallindustrie durchlaufen zur ersten Formgebung Gießprozesse. Dabei werden die Schmelzflüssigwerkstoffe, Eisenmetalle bzw. Nichteisenmetalle, in geformte Gegenstände mit bestimmten Werkstückeigenschaften überführt. Für die Formgebung der Gussstücke müssen zunächst zum Teil sehr komplizierte Gießformen zur Aufnahme der Metallschmelze hergestellt werden. Die Gießformen werden unterteilt in verlorene Formen, die nach jedem Guss zerstört werden, sowie Dauerformen, mit denen jeweils eine große Anzahl von Gussstücken hergestellt werden kann. Die verlorenen Formen bestehen meist aus einem feuerfesten, körnigen Formgrundstoff, der mit Hilfe eines härtbaren Bindemittels verfestigt wird.

Formen sind Negative, sie enthalten den auszugießenden Hohlraum, der das zu fertigende Gussstück ergibt. Die Innenkonturen des zukünftigen Gussstücks werden durch Kerne gebildet. Bei der Herstellung der Form wird mittels eines Modells des zu fertigenden Gussstücks der Hohlraum in den Formgrundstoff geformt. Innenkonturen werden durch Kerne dargestellt, die in einem separaten Kernkasten geformt werden.

Zur Herstellung der Gießformen können sowohl organische als auch anorganische Bindemittel eingesetzt werden, deren Aushärtung durch kalte oder heiße Verfahren erfolgen kann. Als kalte Verfahren bezeichnet man dabei Verfahren, bei denen die Aushärtung im Wesentlichen bei Raumtemperatur ohne Erhitzen der Formstoffmischung erfolgt. Die Aushärtung erfolgt dabei meist durch eine chemische Reaktion, die beispielsweise dadurch ausgelöst werden kann, dass ein gasförmiger Katalysator durch die zu härtende Formstoffmischung geleitet wird, oder indem der Formstoffmischung ein flüssiger Katalysator zugesetzt wird. Bei heißen Verfahren wird die Formstoffmischung nach der Formgebung auf eine ausreichend hohe Temperatur erhitzt, um beispielsweise das im Bindemittel enthaltene Lösungsmittel auszutreiben, oder um eine chemische Reaktion zu initiieren, durch welche das Bindemittel durch Vernetzen ausgehärtet wird.

Die Herstellung der Gießformen kann dabei in der Weise verlaufen, dass der Formgrundstoff zunächst mit dem Bindemittel vermengt wird, sodass die Körner des Formgrundstoffs mit einem dünnen Film des Bindemittels überzogen sind. Die aus Formgrundstoff und Bindemittel erhaltene Formstoffmischung kann dann in eine entsprechende Form eingebracht und gegebenenfalls verdichtet werden, um eine ausreichende Standfestigkeit der Gießform zu erreichen. Anschließend wird die Gießform ausgehärtet, beispielsweise indem sie erwärmt wird oder indem ein Katalysator zugegeben wird, der eine Aushärtungsreaktion bewirkt. Hat die Gießform zumindest eine gewisse Anfangsfestigkeit erreicht, so kann sie aus der Form entnommen werden.

Wie bereits erwähnt, werden Gießformen für die Herstellung von Metallkörpern häufig aus sogenannten Kernen und Formen zusammengesetzt. Dabei werden an die Kerne und Formen unterschiedliche Anforderungen gestellt. Bei Formen steht eine relativ große Oberfläche zur Verfügung, um Gase abzuleiten, die beim Abguss durch die Einwirkung des heißen Metalls entstehen. Bei Kernen steht meist nur eine sehr kleine Fläche zur Verfügung, über welche die Gase abgeleitet werden können. Bei zu starker Gasentwicklung besteht daher die Gefahr, dass Gas aus dem Kern in das flüssige Metall übertritt und dort zur Ausbildung von Gussfehlern führt. Oftmals werden die inneren Hohlräume daher durch Sandkerne erzeugt, welche durch Cold-Box-Bindemittel verfestigt wurden, also einem Bindemittel auf der Basis von Polyurethanen, während die äußere Kontur des Gussstücks durch kostengünstigere Formen dargestellt wird, wie eine Grünsandform, eine durch ein Furanharz oder ein Phenolharz gebundene Form oder durch eine Stahlkokille.

Für größere Formen werden meist organische Polymere als Bindemittel für den feuerfesten, körnigen Formgrundstoff verwendet. Als feuerfester, körnigen Formgrundstoff wird häufig gewaschener, klassifizierter Quarzsand verwendet, aber auch andere Formgrundstoffe wie z. B. Zirkonsande, Chromitsande, Schamotten, Olivinsande, feldspathaltige Sande und Andalusitsande. Die aus Formgrundstoff und Bindemittel erhaltene Formstoffmischung liegt bevorzugt in einer rieselfähigen Form vor.

Gegenwärtig werden für die Herstellung von Gießformen vielfach organische Bindemittel, wie z. B. Polyurethan-, Furanharz- oder Epoxy-Acrylatbindemittel eingesetzt, bei denen die Aushärtung des Bindemittels durch Zugabe eines Katalysators erfolgt.

Die Auswahl des geeigneten Bindemittels richtet sich nach der Form und der Größe des herzustellenden Gussstücks, den Produktionsbedingungen sowie dem Werkstoff, der für den Guss verwendet wird. So werden bei der Herstellung kleiner Gussstücke, die in großen Zahlen hergestellt werden, oft Polyurethan-Bindemittel verwendet, da diese schnelle Taktzeiten und damit auch eine Serienherstellung ermöglichen.

Die Verwendung von Zweikomponenten-Polyurethan-Bindemitteln zur Kernherstellung hat in der Gießereiindustrie große Bedeutung erlangt. Eine Komponente enthält dabei ein Polyol mit mindestens zwei OH-Gruppen pro Molekül, die andere ein Polyisocyanat mit mindestens zwei NCO-Gruppen pro Molekül. Bei einer Form der Kernherstellung, dem sog. Cold-Box Verfahren, werden die beiden Komponenten zuerst gleichzeitig oder nacheinander mit einem geeigneten Formgrundstoff, z.B. Quarzsand, vermischt. Diese Mischung, die sog. Formstoffmischung, wird anschließend in den Vorratsbehälter einer Kernschießmaschine überführt, von dort mit Hilfe von Druckluft in ein Formwerkzeug befördert und in diesem durch Einleiten eines gasförmigen niedrigsiedenden tertiären Amins als Katalysator ausgehärtet, so dass ein fester, selbsttragender Kern erhalten wird (US 3,409,579). Als weitere Bestandteile kann der Formgrundstoff noch Additive enthalten, wie sie z.B. in EP 0 795 366 A1 beschrieben sind.

Als feuerfeste Formgrundstoffe können beispielsweise Quarz-, Zirkon- oder Chromerzsand, Olivin, Schamotte und Bauxit verwendet werden. Weiterhin können auch synthetisch hergestellte Formgrundstoffe eingesetzt werden, wie z.B. Aluminiumsilikathohlkugeln (sog. Microspheres), Glasperlen, Glasgranulat oder die unter der Bezeichnung "Cerabeads" bzw. "Carboaccucast" bekannten kugelförmigen keramischen Formgrundstoffe. Mischungen der genannten Formgrundstoffe sind ebenfalls möglich.

Als zweckbestimmenden Anteil enthalten Schlichtezusammensetzungen konventionell mindestens einen Feuerfeststoff. Der Zweck dieses Feuerfeststoffs liegt hauptsächlich in der Beeinflussung der Oberfläche des zu beschichtenden Gussformkörpers, um den oben genannten Anforderungen hinsichtlich der Vermeidung von Sandfehlern, die zu Fehlern im Guss und zu Unsauberkeit des Gussteils führen, gerecht zu werden.

Beispielsweise kann in der Gießereitechnik der Feuerfeststoff die Sandporen eines Kern- oder Formteils verschließen, um das Eindringen des Gießmetalls zu verhindern.

Beispiele für Feuerfeststoffe sind Pyrophyllit, Glimmer, Zirkonsilikat, Andalusit, Schamotte, Eisenoxid, Kyanit, Bauxit, Olivin, Aluminiumoxid, Quarz, Talk, kalzinierte Kaoline (Metakaolin) und/oder Graphit alleine oder als Mischungen davon.

So beschreiben WO 2004/083321 A1 und EP 2 364 795 A1 die Verwendung von feinkörnigem Material, wie Metakaolin, was die Sandporen imprägnieren kann, und einem plättchenförmigen groben Pyrophyllit, das zu einer Abdeckung der Sandoberfläche führt und so zu einem guten Schutz sowohl gegen Blattrippen als auch Penetrationen führt.

Konventionellerweise umfasst eine Schlichtezusammensetzung eine Trägerflüssigkeit. Die festen Bestandteile der Schlichtezusammensetzung können mit der Trägerflüssigkeit eine Suspension bilden, wodurch die Feststoffbestandteile verarbeitbar werden und durch ein geeignetes Verfahren, wie z.B. Tauchen, auf den zu beschichtenden Körper aufgetragen werden können.

Allgemein wird beim Beschichten von porösen Stoffen das Auftragsverhalten der Beschichtungsmasse nicht nur durch die Rheologie der Beschichtungsmasse, sondern auch durch das Saugverhalten des porösen Körpers sowie durch das Rückhaltevermögen der Trägerflüssigkeit durch den Überzugsstoff beeinflusst. Hinsichtlich des Saugverhaltens poröser Körper ist zu bemerken, dass Substrate mit hydraulischen Bindemitteln wie Ton, Zement und Wasserglas die Trägerflüssigkeit in der Regel besonders stark aufsaugen.

Bei Beschichtungsmassen auf Basis eines wässrigen Bindemittelsystems ist der Einsatz von Stellmitteln, wie beispielsweise natürliche Schleime oder Zellulosederivate, bekannt. Diese bewirken zwar ein hohes Wasserrückhaltevermögen des Überzugstoffes, allerdings wird die Rheologie des Systems dahingehend negativ beeinflusst, dass die Beschichtungsmassen unvorteilhafte, geringere strukturviskose Eigenschaften aufweisen und zähflüssiger ablaufen.

Dieses kann zu unerwünschten Anwendungsmerkmalen wie Tropfen- und Gardinenbildung sowie ungleichmäßigen Schichtstärken führen. Dabei ist insbesondere beim Tauchen als Aufbringungsmethode die Optimierung des Ablaufverhaltens der Beschichtungsmasse zur Erzielung von Konturenausbildung, gleichmäßiger Schichtdicke und geringer Tropfenbildung besonders wichtig.

Grundsätzlich muss jede Beschichtungsmasse bei der Verarbeitung im homogenen Zustand gehalten werden. Insbesondere ist ein Absetzen der Feststoffe der Suspension zu vermeiden. In Verbindung mit dem erforderlichen Auftragsverhalten soll der rheologische Charakter sowie der Thixotropierungsgrad der komplexen Suspensionen den erwünschten Anforderungen entsprechen.

So werden beispielsweise quellfähig aktivierte Schichtsilikate in zahlreichen Gebieten der Technik als Verdickungsmittel für wasserhaltige Systeme eingesetzt. Unter Einsatz von Scherkräften werden dazu die Schichtsilikate in feinverteilter Form im System dispergiert, wobei sich die einzelnen Schichtplättchen weitgehend bis vollständig voneinander lösen und in dem System eine kolloidale Dispersion oder Suspension bilden, die zu einer Gelstruktur führt.

In DE 37 040 84 A1 wird vorgeschlagen, die Stabilität einer solchen Gelstruktur sowie die rheologische Wirksamkeit eines Verdickungsmittels zu verbessern, indem zu einem quellfähig aktivierten Schichtsilikat ein langkettiger organischer Polyelektrolyt, wie beispielsweise ein Polysaccharid oder Hetero-Polysaccharid mit einem Gesamt-Molekulargewicht von mindestens 2 Millionen, gegeben wird. Zusätzlich können die Komponenten zur Steigerung der rheologischen Wirksamkeit mit primären oder sekundären Aminen und/oder einem aminofunktionellen Silan zur Umsetzung gebracht werden.

EP 0 751 103 A1 offenbart die Verwendung von nicht-kalzinierten Smektit-Tonen und organischen Additiven um die Festigkeit von Tonzusammensetzungen für den Schlickerguss von komplex geformten keramischen Gegenständen zu erhöhen.

US 5,164,433 offenbart ein Verdickungsmittel für wässrige Systeme, welches ein Tonmaterial, Stärke und ein Polymer oder Copolymer einer ungesättigten Carbonsäure, einer modifizierten ungesättigten Carbonsäure und/oder eines Vinylmonomers umfasst.

EP 0 509 202 A1 beschreibt ein rheologisches Additiv, welches Ton, ein polymeres Material und Stärke umfasst. Der Ton ist aus Montmorillonit, Bentonit, Hectorit, Kaolin, Illit, Saponit, Attapulgit, Sepiolith und Gemischen davon ausgewählt. Ferner wird eine Beschichtungszusammensetzung auf Wasserbasis beschrieben, umfassend ein Pigment, Latexstreckmittel und ein derartiges rheologisches Additiv.

US 5,120,465 beschreibt ein Verdickungsmittel, welches geeignet ist, einem ionischen Detergens thixotrope Eigenschaften zu verleihen, wobei das Verdickungsmittel ein Gemisch aus Kaolinit-Ton und nicht-Kaolinit-Ton, ausgewählt aus Smektit-Ton, Attapulgit-Ton und Gemischen davon, umfasst, wobei der Kaolinit-Ton Kaolinteilchen umfasst, wobei mindestens etwa 50 Gew.-% der Teilchen eine Teilchengröße von weniger als 2 µm äquivalentem sphärischen Durchmesser besitzen, sowie eine detergente Zusammensetzung, umfassend ein derartiges Verdickungsmittel.

US 5,735,943 beschreibt ein trockenes, rheologisches Additiv für organische Fluidsysteme, umfassend (a) ein oder mehrerer Organotone, hergestellt durch Umsetzung von Smektit-Ton oder ein oder mehreren organischen Kationen, und (b) ein oder mehrerer faserförmige Materialien.

Allerdings genügen die bekannten Verdickungsmittel nicht immer den speziellen Anforderungen an die Steuerung des Auftragsverhaltens von Beschichtungsmassen für poröse Körper, und wichtige Eigenschaften der Beschichtungsmassen werden nicht gleichzeitig optimal eingestellt.

WO 2004/083321 A1 beschreibt die Verwendung von einem rheologischen Additiv, welches die Bestandteile illithaltiger Ton : Smektit: Attapulgit in dieser Reihenfolge im Verhältnis von 1 bis 100 : 1 bis 100 : 1 bis 100, bevorzugt 1 bis 30 : 1 bis 20 : 1 bis 20 umfasst. Diese Beschichtungsmassen umfassen bevorzugt 0,1 bis 10 Gew.-% des illithaltigen Tons, 0,1 bis 10 Gew.-% des Smektits und 0,1 bis 10 Gew.-% Attapulgit. In einer besonders bevorzugten Ausführungsform umfasst eine Beschichtungsmasse 0,1 bis 3,0 Gew.-% des illithaltigen Tons, 0,1 bis 2,0 Gew.-% des Smektits und 0,1 bis 2,0 Gew.-% Attapulgit.

Ein Verfahren zur Herstellung von Gießformen und Kernen aus kunstharzgebundenem Formsand umfasst beispielsweise das Herstellen einer Grundform bzw. eines Grundkerns aus dem Formsand und das Aufbringen einer feuerfeste anorganische Bestandteile enthaltenden Formbeschichtung, welche auch Schlichte genannt wird, zumindest auf diejenigen Oberflächen der/des Grundform/Grundkerns, die mit dem gegossenen Metall in Berührung kommen. Die Formbeschichtungen haben zum einen den Zweck, die Formteiloberfläche zu beeinflussen, das Gussstückaussehen zu verbessern, das Gussstück metallurgisch zu beeinflussen und/oder Gussfehler zu vermeiden. Ferner haben diese Beschichtungen oder Schlichten die Funktion, die Form vom flüssigen Metall beim Gießen chemisch zu isolieren, wodurch jegliche Haftung verhindert und die spätere Trennung von Form- und Gussteil ermöglicht wird. Darüber hinaus gewährleistet die Schlichte eine thermische Trennung von Form- und Gussstück. Wenn diese Funktion nicht erfüllt wird, wird z.B. eine Metallform im Laufe der aufeinanderfolgenden Gießvorgänge solchen thermischen Belastungen ausgesetzt, dass sie vorzeitig zerstört wird. Die Wärmeübertragung kann gezielt genutzt werden, um das Abkühlen des Gussstücks zu beeinflussen. Bei der Fertigung von Cold-Box-Kernen treten in der Praxis immer wieder Probleme mit Expansionsfehlern des Sandes auf, die aufgrund des sogenannten Quarzsprungs der Umwandlung von α in β Quarz und einer Längenausdehnung von etwa 1% bei ca. 580°C zu Spannungen in der Kernoberfläche führen. Hierdurch bedingt entstehen sogenannte Blattrippen (aufgerissene Kerne mit eingedrungenem Metall) oder Schülpen (abgesprengte Sandschicht), die zu einer erhabenen Gussoberfläche und an anderen Stellen zu Sandeinschlüssen führen.

Ein weiteres Thema ist die zunehmende Forderung von Automobilgießeren nach Gussteilen mit Restschmutz-freien Wasser- oder Öl-führenden Kavitäten wie Wassermantel oder Ölkanäle.

Da diese wegen schlechter Zugänglichkeit nur schwer zu reinigen sind, besteht die Forderung nach Schlichten, die diese Anforderung erfüllen. In den letzten Jahren werden zunehmend von innenliegenden Gusskonturen glattere Oberflächen gefordert. Idealerweise mit einer Rauigkeit Rz von weniger als 25.

WO 2011/110798 A1 beschreibt eine Gießereibeschichtungszusammensetzung, umfassend einen flüssigen Träger; ein Bindemittel; und einen teilchenförmigen feuerfesten Füllstoff; wobei der teilchenförmige feuerfeste Füllstoff eine erste relativ grobe Fraktion mit einer Teilchengröße von d > 38 µm und eine zweite relativ feine Fraktion mit einer Teilchengröße von d < 38 µm umfasst, wobei nicht mehr als 10 % des gesamten teilchenförmigen feuerfesten Füllstoffs eine Teilchengröße von 38 µm < d < 53 µm und 0 bis 50 % der zweiten relativ feinen Fraktion aus kalziniertem Kaolin besteht.

DE 10 2009 032668 A1 beschreibt eine gebrauchsfertige Schlichte zur Herstellung von Formüberzügen auf verlorenen Formen bzw. auf Kernen für den Eisen- und Stahlguss, wobei die Schlichte einen gewichtsbezogenen Anteil von 0,001% oder mehr und weniger als 1% an anorganischen Hohlkörpern enthält, dadurch gekennzeichnet, dass die anorganischen Hohlkörper teilweise oder vollständig aus kristallinem Material bestehen.

WO 2006/063696 A1 beschreibt eine Schlichtezusammensetzung für Giessformen, umfassend eine Lösungsmittelkomponente und eine Feststoffkomponente, dadurch gekennzeichnet, dass die Feststoffkomponente als Hauptbestandteil ein Gemisch aus Metakaolinit und Pyrophyllit umfasst.

Es war eine Aufgabe der vorliegenden Erfindung, eine Schlichtezusammensetzung bereitzustellen, welche einen geringen Restschmutz nach dem Abguss sicherstellt.

Überraschenderweise hat sich gezeigt, dass eine Kombination von einem Ton und Glimmer, wobei der Ton von etwa 50 bis etwa 90 Gewichts-% Kaolinit und von etwa 5 bis etwa 35 Gewichts-% Montmorillonit umfasst, ggf. mit Metakaolinit und/oder Graphit, die oben genannte Anforderung sehr gut erfüllen kann.

Die erfindungsgemäße Schlichtezusammensetzung kann außerdem Blattrippen, Penetrationen, Gasfehler und/oder Schülpen verringern. Es wurde auch gefunden, dass die Feuerfestigkeit und Feinkörnigkeit (Imprägnierung der Sandhohlräume) des Tons zu hervorragenden Eigenschaften hinsichtlich des Schutzes gegen Penetrationen führt. Insbesondere die hohen Isolierwerte der Schlichtezusammensetzung bewirken einen sehr guten Schutz gegen sogenannte Blattrippen, die häufig bei Quarzsand durch die thermische Ausdehnung des Quarzsandes (Quarzsprung) und die unzureichenden thermischen Festigkeiten insbesondere bei Polyurethan-Cold-Box-Kernen festzustellen sind. Des Weiteren kann sich die Schlichte nach dem Abgießen leicht vom Gussteil abschälen lassen.

### Beschreibung der Figuren

Figur 1: Abguss mit erfindungsgemäßer Zusammensetzung. Der Abguss hat geringen Rückstand und keine Gussfehler.
Figur 2: Abguss mit nicht erfindungsgemäßer Zusammensetzung. Der Abguss hat viel Rückstand und Blattrippen.

### Zusammenfassung der Erfindung

Demgemäß betrifft die vorliegende Erfindung eine Schlichtezusammensetzung, umfassend eine Feststoffkomponente, die einen Ton und Glimmer umfasst, wobei der Ton von etwa 50 bis etwa 90 Gewichts-% Kaolinit und von etwa 5 bis etwa 35 Gewichts-% Montmorillonit umfasst, wobei die Schlichtezusammensetzung, bezogen auf die Feststoffkomponente, etwa 5 bis etwa 50 Gewichtsteile Ton und etwa 10 bis etwa 80 Gewichtsteile Glimmer umfasst, wobei das Verhältnis von Glimmer zu Ton etwa 1:1 bis etwa 5:1 (Gew./Gew.) beträgt.

Des Weiteren betrifft die vorliegende Erfindung ein Verfahren zur Beschichtung einer Gießform, wobei das Verfahren die Schritte umfasst:
(a) Bereitstellen einer Gießform, die eine Oberfläche umfasst, die einen Gießhohlraum definiert,
(b) Bereitstellen der erfindungsgemäßen Schlichtezusammensetzung;
(c) Aufbringen einer Schicht der Schlichtezusammensetzung auf mindestens einen Teil der Oberfläche, die den Gießhohlraum definiert; und
(d) Trocknen der Schlichtezusammensetzung.

Ein weiterer Aspekt der Erfindung ist die Verwendung der erfindungsgemäßen Schlichtezusammensetzung zur Beschichtung einer Gießform, wobei die Gießform eine Oberfläche umfasst, die einen Gießhohlraum definiert, und eine Schicht der Schlichtezusammensetzung auf mindestens einen Teil der Oberfläche, die den Gießhohlraum definiert, aufgebracht wird.

Eine beschichtete Gießform, die nach dem vorstehenden Verfahren erhältlich ist, wird ebenfalls beansprucht.

### Detaillierte Beschreibung der Erfindung

Die vorliegende Erfindung betrifft eine Schlichtezusammensetzung, umfassend eine Feststoffkomponente, die einen Ton und Glimmer umfasst, wobei der Ton etwa 50 bis etwa 90 Gewichts-% Kaolinit und etwa 5 bis etwa 35 Gewichts-% Montmorillonit umfasst, wobei die Schlichtezusammensetzung, bezogen auf die Feststoffkomponente, etwa 5 bis etwa 50 Gewichtsteile Ton und etwa 10 bis etwa 80 Gewichtsteile Glimmer umfasst, wobei das Verhältnis von Glimmer zu Ton etwa 1:1 bis etwa 5:1 (Gew./Gew.) beträgt. Alle Komponenten, die nach dem Trocknen der gebrauchsfertigen Schlichtezusammensetzung als Feststoffe vorliegen,werden zu "eine Feststoffkomponente" gezählt.

### Ton

Ton ist ein natürlich vorkommendes Material, das hauptsächlich aus Tonmineralteilchen besteht, bei ausreichenden Wassergehalten generell plastisch verformbar ist und spröde wird, wenn es getrocknet oder gebrannt wird. Tonminerale enthalten Schichtsilikate.

Der in der erfindungsgemäßen Schlichtezusammensetzung eingesetzte Ton enthält gemäß der vorliegenden Erfindung von etwa 50 bis etwa 90 Gewichts-% Kaolinit, bevorzugt kann der Ton von etwa 55 bis etwa 85 Gewichts-%, besonders bevorzugt von etwa 55 bis etwa 80 Gewichts-% Kaolinit enthalten.

Weiterhin enthält der in der erfindungsgemäßen Schlichtezusammensetzung verwendete Ton von etwa 5 bis etwa 35 Gewichts-% Montmorillonit, bevorzugt kann der Anteil Montmorillonit von etwa 10 bis etwa 30 Gewichts-% betragen.

Der verwendete Ton kann weiterhin Illit enthalten. Der Illit-Anteil ist nicht besonders beschränkt, bevorzugt kann dieser von etwa 0 Gew.-% bis etwa 20 Gew.-%, weiter bevorzugt von etwa 0 Gew.-% bis etwa 15 Gew.-%, besonders bevorzugt von etwa 5 Gew.-% bis etwa 15 Gew.-%, bezogen auf die Gesamtmenge Ton betragen.

Der Ton kann weiterhin Quarz enthalten. Der Quarz-Anteil ist nicht besonders beschränkt, bevorzugt kann dieser von etwa 0 Gew.-% bis etwa 20 Gew.-%, weiter bevorzugt von etwa 0 Gew.-% bis etwa 15 Gew.-%, besonders bevorzugt von etwa 0 Gew.-% bis etwa 12 Gew.-%, bezogen auf die Gesamtmenge Ton betragen.

Der Ton kann weiterhin Eisen-Titan-Minerale enthalten. Der Eisen-Titan-Mineral-Anteil ist nicht besonders beschränkt, bevorzugt kann dieser von etwa 0 Gew.-% bis etwa 10 Gew.-%, weiter bevorzugt von etwa 0 Gew.-% bis etwa 7 Gew.-%, besonders bevorzugt von etwa 0 Gew.-% bis etwa 5 Gew.-%, bezogen auf die Gesamtmenge Ton betragen.

In einer Ausführungsform kann der Ton weitere Bestandteile enthalten. Bevorzugt sind diese Bestandteile in einem Anteil von etwa 0 Gew.-% bis etwa 25 Gew.-%, bevorzugt von etwa 0 Gew.-% bis etwa 5 Gew.-%, besonders bevorzugt von etwa 0 Gew.-% bis etwa 1 Gew.-% vorhanden. In einer Ausführungsform kann der Bestandteil Glimmer sein. Der Anteil des Glimmers ist nicht besonders beschränkt, bevorzugt kann dieser in einem Anteil von etwa 0 Gew.-% bis etwa 25 Gew.-%, stärker bevorzugt von etwa 0 Gew.-% bis etwa 5 Gew.-%, betragen. Besonders bevorzugt enthält der Ton 0 Gewichtsteile Glimmer.

In einer weiteren Ausführungsform kann der Bestandteil ein von Glimmer verschiedenes Schichtsilikat sein, ausgewählt aus der Gruppe bestehend aus Attapulgit, Pyrophyllit, Serpentinen, Saponit, Beidellit, Nontronit, Vermiculit, Spiolith, synthetischem Lithium-Magnesium Schichtsilikat Laponite RD oder Gemische davon. Der Anteil des von Glimmer verschiedenen Schichtsilikats ist nicht besonders beschränkt, bevorzugt kann dieser von etwa 0 Gew.-% bis etwa 25 Gew.-%, stärker bevorzugt von etwa 0 Gew.-% bis etwa 5 Gew.-%, betragen. Weiter bevorzugt enthält der Ton 0 Gew.-% von Glimmer verschiedenes Schichtsilikat, besonders bevorzugt enthält der Ton 0 Gew.-% Attapulgit und Pyrophyllit.

Kombinationen der vorstehenden Bereiche und bevorzugten Bereich der Tonkomponenten werden natürlich ebenfalls in Betracht gezogen.

In einer bevorzugten Ausführungsform enthält der Ton von etwa 50 bis etwa 90 Gewichts-% Kaolinit, von etwa 5 bis etwa 35 Gewichts-% Montmorillonit, von etwa 0 Gew.-% bis etwa 20 Gew.-% Illit, von etwa 0 Gew.-% bis etwa 20 Gew.-% Quarz, von etwa 0 Gew.-% bis etwa 10 Gew.-% Eisen-Titan-Minerale und 0 bis 5 Gew.-% Glimmer oder von Glimmer verschiedene Schichtsilikate (bevorzugt 0 Gew.-% Glimmer oder von Glimmer verschiedene Schichtsilikate).

In einer bevorzugten Ausführungsform enthält der Ton von etwa 55 bis etwa 80 Gewichts-% Kaolinit, von etwa 10 bis etwa 30 Gewichts-% Montmorillonit, von etwa 5 Gew.-% bis etwa 15 Gew.-% Illit, von etwa 0 Gew.-% bis etwa 12 Gew.-% Quarz, von etwa 0 Gew.-% bis etwa 5 Gew.-% Eisen-Titan-Minerale und 0 bis 5 Gew.-% Glimmer oder von Glimmer verschiedene Schichtsilikate (bevorzugt 0 Gew.-% Glimmer oder von Glimmer verschiedene Schichtsilikate).

Da Ton Aluminosilikate enthält, kann man die Zusammensetzung über RFA / EDX (Röntgenfluoreszenzanalyse / Energiedispersive Röntgenspektroskopie) analysieren und den Aluminiumanteil (auf Al₂O₃ umgerechnet) und den Siliciumanteil (auf SiO₂ umgerechnet) angeben. Der Al₂O₃-Anteil des Tons ist nicht besonders beschränkt, bevorzugt kann der Ton jedoch einen Al₂O₃-Anteil von etwa 30 Gew.-% bis etwa 45 Gew.-%, weiter bevorzugt von etwa 35 Gew.-% bis etwa 40 Gew.-%, besonders bevorzugt von etwa 36 Gew.-% bis etwa 38 Gew.-% aufweisen, bezogen auf die Gesamtmenge Ton. Der SiO₂-Anteil des Tons ist nicht besonders beschränkt. Bevorzugt kann der Ton jedoch einen SiO₂-Anteil von etwa 45 Gew.-% bis etwa 70 Gew.-%, weiter bevorzugt von etwa 50 Gew.-% bis etwa 65 Gew.-%, besonders bevorzugt von etwa 52 Gew.-% bis etwa 62 Gew.-% aufweisen, bezogen auf die Gesamtmenge Ton.

Weiterhin ist der Glühverlust des Tons nicht besonders beschränkt. Bevorzugt kann der Glühverlust von etwa 9 Gew.-% bis etwa 18 Gew.-%, weiter bevorzugt von etwa 11 Gew.-% bis etwa 16 Gew.-%, besonders bevorzugt von etwa 12 Gew.-% bis etwa 15 Gew.-% betragen. Der Glühverlust kann gemäß DIN 51081 bestimmt werden.

Die Korngrößenverteilung der einzelnen Bestandteile der Schlichtezusammensetzung kann anhand der Durchgangsanteile D90, D50, D10 und D01 bestimmt werden. Diese sind eine Maßzahl für die Teilchengrößenverteilung. Hierbei bezeichnen die Durchgangsanteile D90, D50, D10 bzw. D01 die Anteile in 90 %, 50 %, 10 % bzw. 1 % der Teilchen, welche durch ein Sieb mit einer Maschenweite entsprechend der bezeichneten Korngrößefraktion hindurchgehen. Bei einem D10-Wert von beispielsweise 5 µm weisen 10% der Teilchen eine Größe von weniger als 5 µm auf. Die Korngröße und die Durchgangsanteile D90, D50, D10 und D01 können mittels Laserbeugungsgranulometrie gemäß ISO13320 bestimmt werden. Angegeben sind die Durchgangsanteile auf Volumen-Basis. Bei nicht kugelförmigen Teilchen wird eine hypothetische kugelförmige Korngröße errechnet und zugrunde gelegt.

Die Korngröße des Tons ist nicht besonders beschränkt, jegliche bekannte Korngröße kann verwendet werden. Bevorzugt kann beim Ton der Durchgangsanteil D10 von etwa 0,01 µm bis etwa 5 µm, weiter bevorzugt von etwa 0,01 µm bis etwa 1 µm, besonders bevorzugt von etwa 0,01 µm bis etwa 0,2 µm betragen. Bevorzugt kann der Ton einen Durchgangsanteil D01 von etwa 0,001 µm bis etwa 0,2 µm, weiter bevorzugt von etwa 0,001 µm bis etwa 0,1 µm, besonders bevorzugt von etwa 0,001 µm bis etwa 0,05 µm aufweisen.

Der Anteil des Tons, bezogen auf die Feststoffkomponente der Schlichtezusammensetzung, beträgt gemäß der vorliegenden Erfindung von etwa 5 bis etwa 50 Gewichtsteile. Bevorzugt kann der Anteil des Tons von etwa 5 bis etwa 40 Gewichtsteile, weiter bevorzugt von etwa 5 bis etwa 35 Gewichtsteile, betragen.

### Glimmer

Weiterhin enthält die Schlichtezusammensetzung Glimmer. Glimmer sind Schichtsilikate, bei denen Tetraeder aus Silicium und Sauerstoff in charakteristischen Schichten zusammenhängen, zwischen denen nur sehr schwache Bindungskräfte bestehen. An diesen Schichten lassen sich die tafeligen Kristalle der Minerale daher leicht spalten. Häufig findet man sechseckige elastisch verformbare Blättchen, die sich in schuppigen Aggregaten vereinigt haben.

Glimmer haben die chemische Zusammensetzung I_{0,5-1}M₂₋₃[T₄O₁₀A₂]
In dieser Formel bedeuten:
- **I:** 12-fach koordinierte Kationen (**K**, **Na**, **Ca**, Ba, Rb, Cs, NH₄)
- **M:** 6-fach koordinierte Kationen (Li, **Mg**, **Fe²⁺**, Mn, Zn, **Al**, Fe³⁺, Cr, V, Ti)
- **T:** 4-fach koordinierte Kationen (**Si**, **Al**, **Fe³⁺**, B, Be)
- **A:** Anion (**OH⁻**, F⁻, Cl⁻, O²⁻, S²⁻)

Die Koordination eines Kations bezeichnet in diesem Zusammenhang Anzahl und Art dessen nächster Nachbarn. Ein 12-fach koordiniertes Kation z.B. in Glimmern ist von 12 Sauerstoffatomen umgeben. Fett hervorgehoben sind die jeweils dominierenden Ionen. Die in Klammern stehenden Ionen können sich in beliebiger Mischung vertreten, stehen aber immer im selben Verhältnis zu den anderen Atomgruppen (Substitution).

Strukturell zeichnen sich die Glimmer durch Schichten von TO₄-Tetraedern und MO₆-Oktaedern aus. Eine Oktaederschicht wird hierbei von 2 Tetraederschichten eingeschlossen. Untereinander sind diese T-O-T-Sandwiches nur sehr schwach über große niedrig geladene Zwischenschichtkationen (I: interlayer: zwischen den Schichten) verbunden.

Charakteristisch für die Minerale der Glimmergruppe ist die perfekte Spaltbarkeit parallel zu diesen Schichtpaketen. Sie haben eine geringe Härte von 2 (parallel zu den Schichtebenen) bis 4 (alle anderen Richtungen).

Glimmer gehören zu den häufigsten gesteinsbildenden Mineralen und sind wichtige Bestandteile vieler magmatischer (Granite, Diorite, Pegmatite...) und metamorpher (Glimmerschiefer, Gneise) Gesteine.

Die Klassifikation und Nomenklatur der Glimmergruppe erfolgt anhand der Besetzung der I-Position, das ist die Kationenposition zwischen den T-O-T-Sandwiches, in drei Untergruppen:
- **Echte Glimmer:** Glimmer mit mehr als 50% einwertigen Kationen auf der I-Position
- **Sprödglimmer:** Glimmer mit mehr als 50% zweiwertigen Kationen auf der I-Position
- **Zwischenschicht-defizitäre Glimmer:** Glimmer mit weniger als 0.85 positiven Ladungen pro Formeleinheit auf der I-Position

Diese Untergruppen werden wiederum unterteilt nach der Besetzung der oktaedrisch koordinierten M-Position:
- **Dioktaedrische Glimmer:** Glimmer mit weniger als 2,5 Kationen auf der M-Position
- **Trioktaedrische Glimmer:** Glimmer mit mehr als 2,5 Kationen auf der M-Position

Im Folgenden sind die verschiedenen Glimmer der einzelnen Untergruppen mit ihren idealisierten Zusammensetzungen aufgeführt:

### Echte Glimmer:

*Dioktaedrisch (Muskovitreihe)* Beispiel
   - Muskovit: K Al₂ [AlSi₃O₁₀(OH)₂]
*Trioktaedrisch (Biotitreihe)* Beispiel
   - Phlogopit: K Mg²⁺₃ [AlSi₃O₁₀(OH)₂]
   **Sprödglimmer:** (Dana: Margarituntergruppe; Strunz: Lepidolitreihe)
*Dioktaedrisch* Beispiel
   - Margarit: Ca Al ₂ [Al₂Si₂O₁₀(OH)₂]
*Trioktaedrisch* Beispiel
   - Clintonit: Ca Mg₂Al [Al₃Si O₁₀(OH)₂]
   **Zwischenschicht-Defizitäre Glimmer:** (Dana: Hydroglimmer; Strunz: Glaukonitreihe)
*Dioktaedrisch* Beispiel
   - Illit (Serie): K_{0.65} Al₂ [Al_{0,65}Si_{3,35}O₁₀(OH)₂]
   - Glaukonit (Serie): K_{0.8} R³⁺_{1.33} R²⁺_{0,67} [Al_{0,13}Si_{3,87}O₁₀(OH)₂]
*Trioktaedrisch* Beispiel
   - Wonsenit: Na_{0.5} Mg_{2,5}Al_{0,5} [AI Si₃O₁₀(OH)₂]

Einige althergebrachte Namen sind als Bezeichnungen für Mischkristallzusammensetzungen zulässig, wenn eine genauere Charakterisierung nicht möglich ist.
- Biotit: Dunkle lithiumfreie Glimmer mit Zusammensetzungen zwischen Annit, Phlogopit, Siderophyllit und Eastonit.
- Zinnwaldit: Dunkle lithiumhaltige Glimmer mit Zusammensetzungen zwischen Siderophyllit und Polylithionit.
- Lepidolith: Lithiumreiche trioktaedrische Glimmer mit Zusammensetzungen zwischen Trilithionit und Ploylithionit
- Glaukonit: Dioktaedrische Zwischenschicht-Defizitäre Glimmer mit mehr als 15% zweiwertiger Kationen auf der M-Position und vorwiegend Fe³⁺ als dreiwertiges Kation auf der M-Position
- Illit: Dioktaedrische Zwischenschicht-Defizitäre Glimmer mit weniger als 25% zweiwertiger Kationen auf der M-Position und vorwiegend Al als dreiwertiges Kation auf der M-Position

Gemäß der vorliegenden Erfindung ist die Art des Glimmers nicht besonders beschränkt, jeder bekannte Glimmer kann verwendet werden. Der Glimmer kann bevorzugt aus Glimmern der Muskovitreihe, beispielsweise Aluminoseladonit, Boromuskovit, Chromphyllit, Chromseladonit, Ferro-Aluminoseladonit, Ferroseladonit, Ganterit, Muskovit, Nanpingit, Paragonit, Roscoelith, Seladonit, Tobelith, der Biotitreihe, beispielsweise Annit, Aspidolith, Eastonit, Ephesit, Fluorannit, Fluorophlogopit (IMA2006-011), Hendricksit, Masutomilith, Montdorit, Norrishit, Phlogopit, Polylithionit, Preiswerkit, Shirokshinit, Shirozulith, Siderophyllit, Sokolovait, Tainiolith, Tetraferriannit, Tetraferriphlogopit, Trilithionit, Voloshinit, der Glaukonitreihe, beispielsweise Brammallit, Glaukonit, Illit, Wonesit, der Lepidolithreihe, beispielsweise Anandit, Bityit, Chernykhit, Clintonit, Ferrokinoshitalith, Kinoshitalith, Margarit, Oxikinoshitalith, Zinnwaldit oder Gemischen davon ausgewählt sein, weiter bevorzugt kann der Glimmer aus der Gruppe bestehend aus Phlogopit und Muskovit ausgewählt sein, besonders bevorzugt kann der Glimmer Muskovit sein.

Die Korngröße des Glimmers ist nicht besonders beschränkt, jede Korngröße kann verwendet werden. Bevorzugt kann der Durchgangsanteil D90 von etwa 100 µm bis etwa 300 µm, weiter bevorzugt von etwa 150 µm bis etwa 250 µm, besonders bevorzugt von etwa 200 µm bis etwa 250 µm betragen. Bevorzugt kann der Durchgangsanteil D50 des Glimmers von etwa 45 µm bis etwa 125 µm, weiter bevorzugt von etwa 63 µm bis etwa 125 µm, besonders bevorzugt von etwa 75 µm bis etwa 125 µm betragen. Bevorzugt kann der Durchgangsanteil D10 eine Korngröße von etwa 1 µm bis etwa 63 µm, weiter bevorzugt von etwa 5 µm bis etwa 45 µm, besonders bevorzugt von etwa 10 µm bis etwa 45 µm aufweisen. Bevorzugt kann der Durchgangsanteil D01 von etwa 0,1 µm bis etwa 10 µm, weiter bevorzugt von etwa 0,5 µm bis etwa 10 µm, besonders bevorzugt von etwa 1 µm bis etwa 5 µm betragen.

Die Form des Glimmers ist nicht besonders beschränkt, jede bekannte Form kann verwendet werden, bevorzugt kann der Glimmer eine tafelige Form aufweisen. Bevorzugt kann das Seitenverhältnis (aspect ratio; Längen-zu-Dicken-Verhältnis) des Glimmers von etwa 10 bis etwa 60, weiter bevorzugt von etwa 10 bis etwa 40, besonders bevorzugt von etwa 20 bis etwa 30 betragen.

Der Anteil des Glimmers in der Schlichtezusammensetzung beträgt von etwa 10 bis etwa 80 Gewichtsteile, bevorzugt von etwa 20 bis etwa 70 Gewichtsteile, besonders bevorzugt von etwa 30 bis etwa 65 Gewichtsteile, bezogen auf die Feststoffkomponente.

Das Verhältnis der einzelnen Bestandteile in der Schlichtezusammensetzung zueinander ist nicht besonders beschränkt. Allerdings beträgt das Verhältnis von Glimmer zu Ton etwa 1:1 bis etwa 5:1, bevorzugt etwa 1,3:1 bis etwa 3:1, besonders bevorzugt etwa 1,4:1 bis etwa 2,5:1 (Gew./Gew.).

### Metakaolinit

Bevorzugt kann die Schlichtezusammensetzung weiterhin Metakaolinit enthalten, um eine Verminderung der Penetrationsfehler zu erreichen. Metakaolinit ist kalzinierter Kaolinit und aus natürlichem Kaolinit erhältlich. Der Metakaolinit ist nicht besonders beschränkt, es kann jeglicher bekannte Metakaolinit verwendet werden. Bevorzugt kann Metakaolinit aus natürlichem Kaolinit dadurch erhalten werden, dass ein Großteil der Verunreinigungen entfernt wird und das dadurch erhaltene Material bei einer Temperatur von etwa 750°C bis etwa 950°C über einen Zeitraum von etwa 1 bis etwa 6 Stunden erhitzt wird. Durch das Erhitzen findet eine Dehydroxylierung statt. Der Grad der Dehydroxylierung ist nicht besonders beschränkt, bevorzugt kann der Restgehalt an Konstitutionswasser über DTG analysiert 2 Gew.-% oder weniger betragen, besonders bevorzugt wird das Konstitutionswasser vollständig entfernt. Das Metakaolinit kann bspw. einen Al-Gehalt (ausgedrückt als Al₂O₃ Gehalt) von etwa 40 bis etwa 50 Gew.-% und einen Si-Gehalt (ausgedrückt als SiO₂ Gehalt) von etwa 60 bis etwa 50 Gew.-% aufweisen. Besonders bevorzugte Metakaolinit-Materialien sind beispielsweise unter der Produktbezeichnung Satintone W von der Firma BASF Ludwigshafen, Deutschland erhältlich.

Der Glühverlust des Metakaolinits sind nicht besonders beschränkt, bevorzugt kann dieser 3 Gew.-% oder weniger, besonders bevorzugt 1 Gew.-% oder weniger betragen, gemessen gemäß DIN 38414.

Das unverdichtete Schüttgewicht des Metakaolinits nicht besonders beschränkt, bevorzugt kann es von etwa 100 g/l bis etwa 300 g/l, weiter bevorzugt von etwa 150 g/l bis etwa 200 g/l betragen, bestimmt gemäß DIN 53194.

Die spezifische Oberfläche des Metakaolinits ist nicht besonders beschränkt, bevorzugt beträgt diese, ausgedrückt in Ölabsorption, gemessen gemäß DIN 53109, von etwa 50 bis etwa 120 %, weiter bevorzugt von etwa 85 bis etwa 120 %.

Weiterhin ist die Korngröße des Metakaolinits nicht besonders beschränkt, bevorzugt liegt der Durchgangsanteil D90 von etwa 1 µm bis etwa 20 µm, weiter bevorzugt von etwa 2 bis etwa 10 µm. Ebenfalls ist der Durchgangsanteil D50 des Metakaolinits nicht besonders beschränkt, bevorzugt kann dieser von etwa 1 µm bis etwa 10 µm betragen, weiter bevorzugt von etwa 1 bis etwa 8 µm, besonders bevorzugt von etwa 1 bis etwa 5 µm. Bevorzugt kann bei Metakaolinit der Durchgangsanteil D10 von etwa 0,1 µm bis etwa 3 µm, weiter bevorzugt von etwa 0,1 µm bis etwa 2 µm, besonders bevorzugt von etwa 0,1 µm bis etwa 1 µm betragen.

Ebenfalls bevorzugt kann bei Metakaolinit der Durchgangsanteil D01 von etwa 0,01 µm bis etwa 0,4 µm, weiter bevorzugt von etwa 0,01 µm bis etwa 0,3 µm, besonders bevorzugt von etwa 0,01 µm bis etwa 0,2 µm betragen.

Der Anteil des Metakaolinits in der Schlichtezusammensetzung ist nicht besonders beschränkt. Bevorzugt kann Metakaolinit, bezogen auf die Feststoffkomponente, in einem Anteil von etwa 0 bis etwa 35 Gewichtsteile, weiter bevorzugt von etwa 0 bis etwa 30 Gewichtsteile, besonders bevorzugt von etwa 0 bis etwa 25 Gewichtsteile enthalten sein.

### Graphit

Die Schlichtezusammensetzung kann gegebenenfalls Graphit enthalten, um eine glänzende Gußoberfläche zu erzielen. Graphit ist ein sehr häufig vorkommendes Mineral aus der Mineralklasse der Elemente und gehört zur Ordnung der Halbmetalle und Nichtmetalle. Er ist neben Diamant und Fulleren die dritte unter irdischen Normalbedingungen gediegene stabile Form (Modifikation) des Kohlenstoffs und kristallisiert meist im hexagonalen, sehr selten auch im rhomboedrischen Kristallsystem. Graphit entwickelt undurchsichtige, graue bis schwarze Kristalle in sechseckiger, tafeliger, schuppiger oder stängeliger Form, die auf den Kristallflächen Metallglanz aufweisen. Massige oder körnige Aggregate sind dagegen matt. Seine Mohshärte beträgt zwischen 1 und 2, seine Dichte etwa 2,1 bis 2,3, und er hat eine grauschwarze Strichfarbe. Graphit kommt in der Natur in Form vereinzelter Flocken und Körner in kohlenstoffreichem, metamorphem Gestein und als Adern in Pegmatit vor. Im kristallinen Graphit liegen parallel verlaufende ebene Schichten, die "Basalebenen" oder "Graphen-Schichten", vor. Aus der extremen Richtungsabhängigkeit der Bindungskräfte im Graphit resultiert eine deutliche Anisotropie der mechanischen, elektrischen und thermischen Eigenschaften des Graphits:
- Leichte Spaltbarkeit des reinen Graphits entlang der Basalebenen, deutlich höhere Festigkeit entlang der Kristallschichten;
- Thermische und elektrische Isolation orthogonal zu den Basalebenen gegenüber einer fast metallischen Leitfähigkeit entlang der Ebenen.

Der Graphit, der erfindungsgemäß verwendet wird, ist nicht besonders beschränkt, jeglicher handelsübliche Graphit kann in der Beschichtung enthalten sein. Bevorzugt kann der Graphit natürlicher makrokristalliner Graphit sein. Bevorzugt ist der Graphit Flockengraphit.

Der Kohlenstoffgehalt des Graphits ist nicht besonders beschränkt, bevorzugt kann der Kohlenstoffgehalt des Graphits etwa 65 Gew.-% oder mehr, bevorzugt etwa 75 Gew.-% oder mehr, weiter bevorzugt etwa 85 Gew.-% oder mehr, besonders bevorzugt etwa 95 Gew.-% oder mehr betragen, bezogen auf das Gesamtgewicht des Graphits.

Bevorzugt kann das Seitenverhältnis (aspect ratio; Längen-zu-Dicken-Verhältnis) des Graphits von etwa 5 bis etwa 50, weiter bevorzugt von etwa 5 bis etwa 20, besonders bevorzugt von etwa 10 bis etwa 20 betragen.

Weiterhin ist die Korngröße des Graphit nicht besonders beschränkt, jegliche übliche Korngröße kann verwendet werden, bevorzugt ist der Durchgangsanteil D90 von etwa 100 µm bis etwa 350 µm, weiter bevorzugt von etwa 100 µm bis etwa 300 µm, besonders bevorzugt von etwa 150 µm bis etwa 280 µm. Weiterhin ist der Durchgangsanteil D50 bevorzugt von etwa 45 µm bis etwa 150 µm, weiter bevorzugt von etwa 60 µm bis etwa 140 µm, besonders bevorzugt von etwa 63 µm bis etwa 125 µm. Bevorzugt kann der Durchgangsanteil D10 von etwa 1 µm bis etwa 75 µm, weiter bevorzugt von etwa 1 µm bis etwa 45 µm, besonders bevorzugt von etwa 1 µm bis etwa 35 µm betragen. Ebenfalls bevorzugt kann der Durchgangsanteil D01 von etwa 0,1 µm bis etwa 10 µm, weiter bevorzugt von etwa 0,5 µm bis etwa 5 µm, besonders bevorzugt von etwa 1 µm bis etwa 5 µm betragen.

Der Anteil des Graphits in der Schlichtezusammensetzung ist nicht besonders beschränkt, bevorzugt kann dieser, bezogen auf die Feststoffkomponente, aber von etwa 0 bis etwa 30 Gewichtsteile, weiter bevorzugt von etwa 0 bis etwa 25 Gewichtsteile, besonders bevorzugt von etwa 0 bis etwa 20 Gewichtsteile.

Die Summe aus Ton, Glimmer, Metakaolinit und Graphit in der Schlichtezusammensetzung ist nicht besonders beschränkt. Üblicherweise kann die Summe etwa 20 bis etwa 100 Gew.-%, bevorzugt etwa 25 bis etwa 100 Gew.-% und besonders bevorzugt etwa 30 bis etwa 100 Gew.-% betragen, bezogen auf die Feststoffkomponenten. In einer bevorzugten Ausführungsform umfasst eine erfindungsgemäße Schlichtezusammensetzung eine Zusammensetzung von etwa 30 bis etwa 65 Gew.-% Glimmer, etwa 5 bis etwa 35 Gew.-% Ton, etwa 0 bis etwa 20 Gew.-% Graphit, etwa 0 bis etwa 25 Gew.-% Metakaolinit, und gegebenenfalls etwa 0,1 bis etwa 2 Gew.-% von Glimmer verschiedenes Schichtsilikat (wie Attapulgit), bezogen auf die Feststoffkomponente. In einer stärker bevorzugten Ausführungsform umfasst eine erfindungsgemäße Schlichtezusammensetzung eine Zusammensetzung von etwa 30 bis etwa 65 Gew.-% Muskovit-Glimmer, etwa 5 bis etwa 35 Gew.-% Ton, etwa 0 bis etwa 20 Gew.-% natürlicher Flockengraphit, etwa 0 bis etwa 25 Gew.-% Metakaolinit, und gegebenenfalls etwa 0,1 bis etwa 2 Gew.-% Attapulgit, bezogen auf die Feststoffkomponente.

### Trägerflüssigkeit

Die Schlichtezusammensetzung kann zur Vereinfachung der Aufbringung eine Trägerflüssigkeit enthalten. Als Trägerflüssigkeit werden alle Bestandteile, die durch das Trocknen der gebrauchsfertigen Schlichtezusammensetzung verflüchtigt werden und nicht in der getrockneten Schlichte in flüssiger Form vorliegen, bezeichnet.

Die Schlichtezusammensetzung kann als trockenes Pulver, als Konzentrat, welches einen Teil der benötigten Menge an Trägerflüssigkeit enthält und vor der Anwendung mit weiterer Trägerflüssigkeit verdünnt werden soll, oder als gebrauchsfertige Schlichtezusammensetzung, die bereits die gewünschte Menge Trägerflüssigkeit enthält, bereitgestellt werden.

Die Trägerflüssigkeit kann von einem Fachmann gemäß der vorgesehenen Anwendung ausgewählt werden. Bevorzugt kann die Trägerflüssigkeit aus Wasser, Alkoholen wie beispielsweise aliphatischen C1-C5 Alkoholen, oder Gemischen davon ausgewählt sein. In einer bevorzugten Ausführungsform ist die Trägerflüssigkeit Wasser, Methanol, Ethanol, n-Propanol, iso-Propanol, n-Butanol, oder Gemischen davon, besonders bevorzugt Wasser, Ethanol, iso-Propanol oder Gemischen davon, stärker bevorzugt kann die Trägerflüssigkeit Wasser sein.

Schlichtezusammensetzungen, deren Trägerflüssigkeit hauptsächlich aus Wasser besteht, werden üblicherweise Wasserschlichten genannt. Schlichtezusammensetzungen, deren Trägerflüssigkeit hauptsächlich aus Alkohol oder Alkoholgemischen besteht, werden Alkoholschlichten genannt. In einer Ausführungsform der vorliegenden Erfindung umfasst die Trägerflüssigkeit etwa 0 bis etwa 100 Gew.-%, vorzugsweise etwa 20 bis etwa 80 Gew.-%, stärker bevorzugt etwa 40 bis etwa 60 Gew.-%, Wasser, und als weitere Komponente etwa 100 bis etwa 0 Gew.-%, bevorzugt etwa 80 bis etwa 20 Gew.-%, stärker bevorzugt etwa 60 bis etwa 40 Gew.-%, eines oder mehrerer vorstehend definierter Alkohole, bezogen auf die Trägerflüssigkeit. Erfindungsgemäß können sowohl reine Wasserschlichten als auch reine Alkoholschlichten als auch Wasser/Alkohol-Gemische eingesetzt werden. In einer besonders bevorzugten Ausführungsform ist Wasser die alleinige Trägerflüssigkeit. Alternativ ist es auch möglich, Schlichtezusammensetzungen herzustellen, deren Lösungsmittelkomponente aus Alkohol oder bei sogenannten Hybridschlichten zunächst nur aus Wasser besteht. Durch Verdünnen mit einem Alkohol oder einem Alkoholgemisch können diese Schlichten als Alkoholschlichten verwendet werden. Vorzugsweise werden hierbei Ethanol, Propanol, Isopropanol und Gemische davon verwendet.

Bei Bedarf können weitere organische Lösungsmittel verwendet werden. Beispiele hierfür sind Essigsäurealkylester wie Essigsäureethylester und Essigsäurebutylester, und Ketone wie Aceton und Methylethylketon. Der Anteil der weiteren organischen Lösungsmittel ist nicht besonders beschränkt, bevorzugt kann dieser von etwa 0 bis etwa 10 Gew.-%, weiter bevorzugt von etwa 0 bis etwa 5 Gew.-%, besonders bevorzugt von etwa 0 bis etwa 1 Gew.-%, bezogen auf die Trägerflüssigkeit, betragen.

Der Anteil der Trägerflüssigkeit in der Schlichtezusammensetzung ist nicht besonders beschränkt, bevorzugt kann dieses 80 Gewichts-% oder weniger, weiter bevorzugt 75 Gewichts-% oder weniger, besonders bevorzugt 70 Gewichts-% oder weniger, betragen.

Dementsprechend beträgt der Anteil der Feststoffkomponente in der Schlichtezusammensetzung bevorzugt etwa 20 Gew.-%, weiter bevorzugt etwa 25 Gew.-%, besonders bevorzugt etwa 30 Gew.-%.

Bei der gebrauchsfertigen Schlichtezusammensetzung beträgt der Anteil der Trägerflüssigkeit bevorzugt von etwa 50 bis etwa 85 Gewichts-%, weiter bevorzugt von etwa 42 bis etwa 85 Gewichts-%, besonders bevorzugt von etwa 55 bis etwa 85 Gewichts-%.

Dementsprechend beträgt der Anteil der Feststoffkomponente in der gebrauchsfertigen Schlichtezusammensetzung bevorzugt von etwa 15 bis etwa 50 Gew.-%, weiter bevorzugt von etwa 15 bis etwa 48 Gew.-%, besonders bevorzugt von etwa 15 bis etwa 45 Gew.-%.

### Quellfähige Schichtsilikate

Die Schlichtezusammensetzung kann gegebenenfalls ein oder mehrere quellfähige Schichtsilikate enthalten, um das Absetzverhalten zu reduzieren und die Rheologie zu steuern. Diese sind von dem vorstehend definierten Ton, Metakaolinit und Glimmer verschieden. Die quellfähigen Schichtsilikate sind nicht besonders beschränkt. Jedes dem Fachmann bekannte quellfähige Schichtsilikat kann zusätzlich enthalten sein, welches zur Einlagerung von Wasser zwischen den Schichten befähigt ist, bevorzugt kann das quellfähige Schichtsilikat aus Attapulgit (Palygorskit), Serpentinen, Kaolinen, Smektiten (wie Saponit, Montmorillonit, Beidellit und Nontronit), Vermiculit, Illit, Spiolith, synthetisches Lithium-Magnesium Schichtsilikat Laponite RD und Gemischen davon ausgewählt sein, besonders bevorzugt Attapulgit (Palygorskit), Serpentinen, Smektiten (wie Saponit, Beidellit und Nontronit), Vermiculit, Illit, Spiolith, synthetisches Lithium-Magnesium Schichtsilikat Laponite RD und Gemischen davon, insbesondere bevorzugt kann das quellfähige Schichtsilikat Attapulgit sein. Attapulgit wird bevorzugt verwendet wegen der Erhöhung der Fließgrenze.

Weiterhin ist die Korngröße der quellfähigen Schichtsilikate nicht besonders beschränkt, jegliche übliche Korngröße kann verwendet werden, bevorzugt kann der Durchgangsanteil D01 von etwa 0,01 µm bis etwa 20 µm, besonders bevorzugt von etwa 0,01 µm bis etwa 10 µm betragen.

Der Anteil der quellfähigen Schichtsilikate (insbesondere Attapulgit) in der Schlichtezusammensetzung ist nicht besonders beschränkt, bevorzugt kann dieser von etwa 0 bis etwa 5 Gewichtsteile, weiter bevorzugt von etwa 0,1 bis etwa 5 Gewichtsteile, besonders bevorzugt von etwa 0,1 bis etwa 4 Gewichtsteile, noch stärker bevorzugt von etwa 0,1 bis 2 Gewichtsteile, bezogen auf die Feststoffkomponente.

### Nicht quellfähige Schichtsilikate

Die Schlichtezusammensetzung kann gegebenenfalls zusätzlich ein oder mehrere nicht quellfähige Schichtsilikate enthalten, welche dazu beitragen, die Rheologie zu steuern. Diese sind von dem vorstehend definierten Ton, Metakaolinit, Glimmer und den quellfähigen Schichtsilikaten verschieden. Die nicht quellfähigen Schichtsilikate sind nicht besonders beschränkt, jedes dem Fachmann bekannte nicht quellfähige Schichtsilikat kann verwendet werden. Bevorzugt kann das nicht quellfähige Schichtsilikat ausgewählt aus Pyrophyllit und Talk sein, besonders bevorzugt kann das nicht quellfähige Schichtsilikat Pyrophyllit sein.

Weiterhin ist die Korngröße der nicht quellfähigen Schichtsilikate nicht besonders beschränkt, jegliche übliche Korngröße kann Korngröße von etwa 1 µm bis etwa 300 µm, besonders bevorzugt von etwa 1 µm bis etwa 200 µm betragen.

Der Anteil der nicht quellfähigen Schichtsilikate (insbesondere Pyrophyllit) an der Feststoffkomponente der Schlichtezusammensetzung ist nicht besonders beschränkt, bevorzugt kann dieser von etwa 0 bis etwa 50 Gewichtsteile, weiter bevorzugt von etwa 0 bis etwa 45 Gewichtsteile, besonders bevorzugt von etwa 0 bis etwa 40 Gewichtsteile, noch stärker bevorzugt von etwa 0 bis 35 Gewichtsteile, bezogen auf die Feststoffkomponente, betragen.

### Optionale Additive

Neben den vorstehenden Bestandteilen kann die Schlichtezusammensetzung übliche Additive wie Bindemittel, Netzmittel, Entschäumer, Pigmente, Farbstoffe und Biozidwirkstoffe enthalten.

### Bindemittel

Die Aufgabe eines Bindemittels liegt vor allem darin die Feststoffkomponente zu binden. Vorzugsweise härtet das Bindemittel irreversibel aus und ergibt somit eine abriebfeste Beschichtung auf der Gießform. Die Abriebfestigkeit ist für die fertige Beschichtung von großer Bedeutung, da die Beschichtung bei mangelnder Abriebfestigkeit beschädigt werden kann. Insbesondere sollte das Bindemittel durch Luftfeuchtigkeit nicht rückerweichen. In bevorzugten Ausführungsformen wird eine Härtung des Bindemittels in an sich bekannter Weise durchgeführt. Zum Beispiel kann bei Acrylatsystemen eine Härtung unter Verwendung von Radikalbildnern, die z. B. unter der Bestrahlung von UV-Licht Radikale bilden, durchgeführt werden. Erfindungsgemäß können alle Bindemittel verwendet werden, die konventionell bspw. in wässrigen und/oder Wasser-Alkohol-Systemen Anwendung finden. Als Bindemittel können beispielsweise Stärke, Dextrin, Peptide, Polyvinylalkohol, Polyvinylacetatcopolymere, Polyacrylsäure, Polystyrol, Polyvinylacetat-Polyacrylatdispersionen und Gemische davon eingesetzt werden. In einer bevorzugten Ausführungsform der Erfindung umfasst das Bindemittel eine Dispersion eines Alkydharzes, welches sowohl in Wasser als auch in niedrigen (bspw. C₁₋₄) Alkoholen, wie Ethanol, Propanol und Isopropanol, löslich ist. Beispiele für Alkydharze sind unmodifizierte wasserdispergierbare Alkydharze, basierend auf einem Naturöl oder deren Fettsäuren mit Polyalkoholen, wie sie beispielsweise in US 3,442,835 beschrieben sind, oder Isocyanat-modifizierte Alkydharze, wie sie beispielsweise in US 3,639,315 beschrieben und welche bevorzugt sind, oder Epoxid-Urethan-modifizierte Alkydharze gemäß DE 43 08 188. Beispielsweise sind Produkte der Necowel-Reihe von ASK Chemicals GmbH, 40721 Hilden, Deutschland, verwendbar. Weitere bevorzugte Bindemittel sind Polyvinylalkohole und Polyvinylacetatcopolymere, insbesondere Polyvinylalkohole.

Die Bindemittel werden vorzugsweise in einer Menge von etwa 0,1 bis etwa 5 Gewichtsteile, stärker bevorzugt etwa 0,2 bis etwa 2 Gewichtsteile, bezogen auf alle Bestandteile der Schlichtezusammensetzung, verwendet.

### Netzmittel

Als Netzmittel können vorzugsweise dem Fachmann bekannte anionische und nichtanionische Tenside mittlerer und hoher Polarität (HLB-Wert von 7 und höher) eingesetzt werden. Beispiele für Netzmittel, die in der vorliegenden Erfindung verwendet werden können, sind Dinatrium-dioctylsulfosuccinat, ethoxyliertes 2,5,8,11-Tetramethyl-6-dodecyn-5,8-diol, ethoxyliertes 2,4,7,9-Tetramethyl-5-decyn-4,7-diol oder Kombinationen von diesen, besonders bevorzugt kann ethoxyliertes 2,4,7,9-Tetramethyl-5-decyn-4,7-diol verwendet werden.

Die Netzmittel werden vorzugsweise in einer Menge von etwa 0,01 bis etwa 1 Gewichtsteile, stärker bevorzugt von etwa 0,05 bis etwa 0,3 Gewichtsteile, noch stärker bevorzugt von etwa 0,1 bis etwa 0,3 Gewichtsteile, bezogen auf alle Bestandteile der Schlichtezusammensetzung, verwendet.

### Entschäumer

Entschäumer oder Antischaummittel werden verwendet, um bei der Herstellung der erfindungsgemäßen Schlichtezusammensetzung und beim Auftragen derselben eine Schaumbildung zu verhindern. Schaumbildung beim Auftragen der Schlichtezusammensetzung kann zu einer ungleichmäßigen Schichtdicke und zu Löchern in der Beschichtung führen. Als Entschäumer können beispielsweise Silikon- oder Mineralöl verwendet werden. Bevorzugt kann der Entschäumer aus der FINASOL Produktreihe, kommerziell erhältlich von TOTAL, ausgewählt sein.

In der vorliegenden Schlichtezusammensetzung werden Entschäumer in einer Menge von etwa 0,01 bis etwa 1 Gewichtsteile, stärker bevorzugt von etwa 0,05 bis etwa 0,3 Gewichtsteile, noch stärker bevorzugt von etwa 0,1 bis etwa 0,2 Gewichtsteile, bezogen auf alle Bestandteile der Schlichtezusammensetzung, verwendet.

### Pigmente und Farbstoffe

In der erfindungsgemäßen Schlichtezusammensetzung können gegebenenfalls übliche Pigmente und Farbstoffe verwendet werden. Diese werden gegebenenfalls zugesetzt, um einen anderen Kontrast, z.B. zwischen verschiedenen Schichten, zu erreichen beziehungsweise einen stärkeren Trenneffekt der Schlichte vom Guss zu bewirken. Beispiele für Pigmente sind rotes und gelbes Eisenoxid. Beispiele für Farbstoffe sind handelsübliche Farbstoffe wie die Luconyl Farbreihe von BASF.

Die Farbstoffe und Pigmente werden üblicherweise in einer Menge von etwa 0,01 bis etwa 10 Gewichtsteile, vorzugsweise von etwa 0,1 bis etwa 5 Gewichtsteile, bezogen auf alle Bestandteile der Schlichtezusammensetzung, verwendet.

### Biozidwirkstoffe

Die Schlichtezusammensetzung kann gegebenenfalls (vor allem wenn die Trägerflüssigkeit Wasser umfasst) ein oder mehrere Biozidwirkstoffe enthalten, um einen bakteriellen Befall zu verhindern und damit einen negativen Einfluss auf die Rheologie und die Bindekraft der Bindungsmittel zu vermeiden. Die Biozidwirkstoffe sind nicht besonders beschränkt, bevorzugt können diese aus der Gruppe bestehend aus Formaldehyd, 2-Methyl-4-isothiazolin-3-on (MIT), 5-Chlor-2-methyl-4-isothiazolin-3-on (CIT), 1,2-Benzisothiazolin-3-on (BIT), oder Gemischen davon, weiter bevorzugt aus 2-Methyl-4-isothiazolin-3-on (MIT), 1,2-Benzisothiazolin-3-on (BIT), oder Gemischen davon, ausgewählt werden.

Der Anteil der Biozidwirkstoffe in der Schlichtezusammensetzung ist nicht besonders beschränkt und hängt vom ausgewählten Biozidwirkstoff ab. Der Anteil kann bspw. von etwa 0,001 bis etwa 0,5 Gewichtsteile, bevorzugt von etwa 0,005 bis etwa 1,0 Gewichtsteile, stärker bevorzugt von etwa 0,005 bis etwa 0,5 Gewichtsteile, besonders bevorzugt von etwa 0,005 bis etwa 0,4 Gewichtsteile, noch stärker bevorzugt von etwa 0,005 bis etwa 0,3 Gewichtsteile, bezogen auf alle Bestandteile der Schlichtezusammensetzung, betragen.

In einer bevorzugten Ausführungsform umfasst eine erfindungsgemäße Schlichtezusammensetzung etwa 30 bis etwa 65 Gewichtsteile Muskovit-Glimmer, etwa 5 bis etwa 35 Gewichtsteile Ton, etwa 0 bis etwa 20 Gewichtsteile natürlicher Flockengraphit, etwa 0 bis etwa 25 Gewichtsteile Metakaolinit und etwa 0,1 bis etwa 2 Gewichtsteile Attapulgit, bezogen auf die Feststoffkomponente. Des Weiteren enthält die Schlichtezusammensetzung etwa 0,2 bis etwa 2 Gewichtsteile Bindemittel, etwa 0,1 bis etwa 0,3 Gewichtsteile Netzmittel, etwa 0,1 bis etwa 0,2 Gewichtsteile Entschäumer, etwa 0,005 bis etwa 0,3 Gewichtsteile Biozidwirkstoff sowie bis zu 70 Gewichts-% Trägerflüssigkeit wie Wasser.

### Herstellung der Schlichtezusammensetzung

Die erfindungsgemäßen Schlichtezusammensetzungen werden nach üblichen Verfahren hergestellt. Beispielsweise wird eine erfindungsgemäße Schlichtezusammensetzung hergestellt, indem ein Großteil der Trägerflüssigkeit (vorzugsweise die gesamte Menge der Trägerflüssigkeit), vorgelegt und hierin Tone und quellfähige und/oder nicht quellfähige Schichtsilikate (falls verwendet) durch Verwendung eines hochscherenden Rührers (z.B. etwa 400 bis etwa 2000 U/min) aufgeschlossen werden. Anschließend werden weitere Feststoffkomponenten, beispielsweise erst (falls verwendet) Metakaolinit, dann Glimmer und (falls verwendet) Graphit, Pigmente und Farbstoffe eingerührt, bis eine homogene Mischung entsteht. Die Reihenfolge der Zugabe spielt hierbei keine oder nur eine untergeordnete Rolle und kann von einem Fachmann leicht bestimmt werden. Zum Schluss werden (falls verwendet) Netzmittel, Entschäumer, Biozidwirkstoffe und Bindemittel eingerührt. Die Schlichtezusammensetzung wird bspw. bei einer Temperatur von vorzugsweise etwa 5 bis etwa 50°C, stärker bevorzugt etwa 10 bis etwa 30°C, mit einer Rührerdrehzahl von vorzugsweise etwa 400 bis etwa 2000 U/min, stärker bevorzugt etwa 1000 bis etwa 1500 U/min, und mit einer Zahnscheibe mit vorzugsweise d/D = etwa 0,3 bis etwa 0,7, stärker bevorzugt d/D = etwa 0,4 bis etwa 0,6 (d= Durchmesser der Zahnscheibe des Rührers D = Durchmesser des Rührbehälters) hergestellt.

Die Eigenschaften der Schlichtezusammensetzung können je nach gewünschter Verwendung, z.B. als Grundbeschichtung oder als Deckbeschichtung, und gewünschter Schichtdicke der aufzutragenden Schlichtezusammensetzung eingestellt werden. Insbesondere die Viskosität der Schlichtezusammensetzung kann von etwa 11 sec bis etwa 25 sec, besonders bevorzugt von etwa 12 sec bis etwa 14 sec, bestimmt nach nach DIN 53211; Auslaufbecher 4 mm, Ford-Cup eingestellt werden.

Die Dichte der Schlichtezusammensetzung kann bspw. von etwa 20°Bé bis etwa 50°Bé, besonders bevorzugt von etwa 25°Bé bis etwa 35°Bé, bestimmt nach der Baumé-Auftriebsmethode; DIN 12791, betragen.

### Anwendung der Schlichtezusammensetzung

Die erfindungsgemäße Schlichtezusammensetzung kann zur Beschichtung einer Gießform eingesetzt werden. Das erfindungsgemäße Verfahren umfasst die Schritte:
(a) Bereitstellen einer Gießform, die eine Oberfläche umfasst, die einen Gießhohlraum definiert,
(b) Bereitstellen einer erfindungsgemäßen Schlichtezusammensetzung;
(c) Aufbringen einer Schicht der Schlichtezusammensetzung auf mindestens einen Teil der Oberfläche, die den Gießhohlraum definiert;
(d) Trocknen der Schlichtezusammensetzung; und
(e) ggf. Härten der Schlichtezusammensetzung.

Als Gießform werden alle Arten von Körpern bezeichnet, welche zur Herstellung von Gussformen notwendig sind. Die Gießformen sind nicht besonders beschränkt, es können alle in der Eisen-, Stahl- sowie Nichtmetallindustrie gebräuchlichen Gießformen verwendet werden, beispielsweise Kerne, Formen oder Kokillen. Die Gießformen können aus einem feuerfesten, körnigen Formgrundstoff, der mit Hilfe eines härtbaren Bindemittels verfestigt wird, bestehen. Der feuerfeste, körnige Formgrundstoff ist nicht besonders beschränkt, es kann jeder übliche Formgrundstoff verwendet werden. Bevorzugt kann der feuerfeste, körnige Formgrundstoff Quarzsand, Zirkonsand, Chromitsand, Schamotte, Bauxit, Olivinsand, feldspathaltiger Sand, Andalusitsand, Aluminiumsilikathohlkugeln (auch als "microspheres" bezeichnet), Glasperlen, Glasgranulat, die unter der Bezeichnung "Cerabeads" bzw. "Carboaccucast" bekannten kugelförmigen keramischen Formgrundstoffe oder Gemische davon umfassen. Das härtbare Bindemittel ist nicht besonders beschränkt. Jedes dem Fachmann bekannte härtbare Bindemittel kann verwendet werden. Bevorzugt können organische Bindemittel wie beispielsweise Polyurethan-, Furanharz- oder Epoxy-Acrylatbindemittel, anorganische Bindemittel, wie Wasserglas, oder Gemische davon verwendet werden, besonders bevorzugt können die Bindemittel auf PUR-Cold-Box-, Wasserglas-CO₂-, Resol-Methylformiat (MF), Resol-CO₂-, Furanharz, Phenolharz oder Wasserglas-Ester-Bindemitteln basieren. Der Anteil des härtbaren Bindemittels in der Gießform ist nicht besonders beschränkt, das Bindemittel kann in jedem üblichen Anteil vorhanden sein. Bevorzugt beträgt der Anteil des Bindemittels von etwa 0,2 bis etwa 5 Gewichtsteilen, weiter bevorzugt von etwa 0,3 bis etwa 4 Gewichtsteilen, besonders bevorzugt von etwa 0,4 bis etwa 3 Gewichtsteilen, bezogen auf 100 Gewichtsteile feuerfesten, körnigen Formgrundstoff. Die Schlichtezusammensetzungen eignen sich für alle denkbaren Anwendungen, bei denen eine Beschichtung von Gießformen mit Schlichten erwünscht ist. Als Beispiele für Gießformen, d.h. für Kerne und Formen im Gießereieinsatz, können Sandkerne genannt werden, die PUR Cold-Box-, Wasserglas-CO₂-, Resol-MF-, Resol-CO₂-, Furanharz-, Phenolharz- oder Wasserglas-Ester gebunden sind. Andere Beispiele für bevorzugte Gießformen, die mit den erfindungsgemäßen Schlichtezusammensetzungen beschichtet werden können, sind z.B. in "Formstoffe und Formverfahren", Eckart Flemming und Werner Tilch, Wiley-VCH, 1993, ISBN 3-527-30920-9, beschrieben.

Die Oberflächen der Gießform definieren einen Gießhohlraum, in dem das flüssige Metall eingeführt wird. Die Oberflächen einer Gießform können die Oberflächen eines Kerns oder einer Hohlform sein. Erfindungsgemäß können die Gießformen ganz oder teilweise beschichtet werden. Vorzugsweise werden die Oberflächen der Gießform beschichtet, die mit dem Gießmetall in Kontakt kommen.

Die Schlichtezusammensetzung muss zunächst in einer gebrauchsfertigen Form bereitgestellt werden. Falls sie als trockenes Pulver oder als Konzentrat vorliegt, wird Trägerflüssigkeit zugegeben, um die für das Aufbringen notwendige Konsistenz zu erreichen.

In einer Ausführungsform kann bspw. die Schlichtezusammensetzung in Form eines Kits (Mehrkomponentenpackung, die zwei oder mehrere Behältnisse für unterschiedliche Komponenten enthält) vorliegen. Dabei können die Feststoffkomponente und die Trägerflüssigkeit nebeneinander in getrennten Behältnissen vorliegen. Alle Bestandteile der Feststoffkomponente können dabei als pulverförmiges Feststoffgemisch in einem Behältnis vorliegen. Die Bestandteile der Feststoffkomponente können alternativ als mehrere getrennte Komponenten bereitgestellt werden. Gegebenenfalls zu verwendende weitere Komponenten, wie beispielsweise Bindemittel, Netzmittel, Entschäumer, Pigmente, Farbstoffe und Biozidwirkstoffe, können in diesem Kit zusammen mit den oben genannten Komponenten oder in einem oder mehreren getrennten Behältnissen vorliegen. Die Trägerflüssigkeit kann entweder die gegebenenfalls zusätzlich zu verwendenden Komponenten umfassen, beispielsweise in einem gemeinsamen Behältnis, oder sie kann getrennt von weiteren optionalen Bestandteilen in einem separaten Behältnis vorhanden sein. Zur Herstellung einer gebrauchsfertigen Schlichtezusammensetzung werden die geeigneten Mengen der Komponenten miteinander vermengt.

Alternativ kann die Schlichtezusammensetzung als Wasserschlichte vorliegen, wobei die Trägerflüssigkeit Wasser sein kann. Durch Zugabe eines Alkohols kann aus dieser Wasserschlichte eine gebrauchsfertige Alkoholschlichte bereitgestellt werden.

Das Aufbringen und Trocknen mindestens einer Schicht einer Schlichtezusammensetzung auf mindestens einen Teil der Oberfläche, die den Gießhohlraum definiert, ist nicht besonders beschränkt. Es können hierzu alle in der Technik beschriebenen konventionellen Aufbringungsverfahren eingesetzt werden. Beispiele für bevorzugte Aufbringungsverfahren sind Tauchen, Fluten, Sprühen und Streichen. Konventionelle Aufbringungsverfahren sind bspw. in "Formstoffe und Formverfahren", Eckart Flemming und Werner Tilch, Wiley-VCH, 1993, ISBN 3-527-30920-9 diskutiert.

Beim Tauchen als Aufbringungsverfahren wird die Gießform bspw. in ein Behältnis mit einer gebrauchsfertigen Schlichtezusammensetzung für etwa 1 Sekunden bis etwa 2 Minuten eingetaucht. Die Zeit, die das Ablaufen der überschüssigen Schlichtezusammensetzung nach dem Tauchen in Anspruch nimmt, richtet sich nach dem Ablaufverhalten der verwendeten Schlichtezusammensetzung. Nach einer ausreichenden Ablaufzeit wird die beschichtete Gießform einer Trocknung unterzogen.

Beim Sprühen als Aufbringungsverfahren werden handelsübliche Druckkesselsprühgeräte verwendet. Hierbei wird bspw. die gebrauchsfertige Schlichtezusammensetzung in einen Druckkessel gefüllt. Über den einzustellenden Überdruck kann die Schlichtezusammensetzung in eine Sprühpistole gedrückt werden, wo sie mit Hilfe von separat regulierbarer Zerstäuberluft versprüht wird. Beim Sprühen ist vorzugsweise darauf zu achten, dass die Pistole so eingestellt ist, dass der Druck für die Schlichtezusammensetzung und die Zerstäuberluft so eingestellt ist, dass die versprühte Schlichtezusammensetzung noch nass auf die Oberfläche der Gießform auftrifft, aber einen gleichmäßigen Auftrag ergibt. Das Aufbringen der Schlichtezusammensetzung kann in einer oder mehreren Schichten erfolgen. Beim Aufbringen mehrerer Schichten kann jede einzelne Schicht nach dem Aufbringen vollständig oder teilweise getrocknet werden.

Als Trocknungsverfahren können alle in der Technik konventionellen Trocknungsverfahren, wie beispielsweise Trocknenlassen an der Luft, Trocknung mit entfeuchteter Luft, Trocknen mit Mikrowellen- oder Infrarotstrahlung, Trocknen im Konvektionsofen, und dergleichen angewendet werden. In einer bevorzugten Ausführungsform der Erfindung wird die beschichtete Gießform bei etwa 100 bis etwa 250°C, stärker bevorzugt bei etwa 120 bis etwa 180°C, in einem Konvektionsofen getrocknet. Bei der Verwendung von Alkoholschlichten wird die Schlichtezusammensetzung bevorzugt durch Abbrennen des Alkohols oder Alkoholgemischs getrocknet. Hierbei wird die beschichtete Gießform durch die Verbrennungswärme zusätzlich erwärmt. In einer weiteren bevorzugten Ausführungsform wird die beschichtete Gießform ohne weitere Behandlung an der Luft getrocknet.

Die Trockenschichtstärke der getrockneten Beschichtung, die sich aus der vorstehend beschriebenen Schlichtezusammensetzung ergibt, ist nicht besonders beschränkt. Die Trockenschichtstärke ist hierbei die Schichtstärke der getrockneten Schlichtezusammensetzung ("Schlichte"), welche durch Trocknen der Schlichtezusammensetzung durch im Wesentlichen vollständiges Entfernen der Trägerflüssigkeit und gegebenenfalls anschließendem Härten erhalten wurde. Bevorzugt kann die Trockenschichtstärke der Beschichtung von etwa 0,1 mm bis etwa 1 mm, weiter bevorzugt von etwa 0,2 mm bis etwa 0,8 mm, besonders bevorzugt von etwa 0,3 mm bis etwa 0,6 mm betragen. Die Trockenschichtstärke der Beschichtung wird entweder vorzugsweise durch Bemaßen von Biegeriegeln vor und nach dem Schlichten (getrocknet) mit einer Mikrometerschraube oder durch Messung mit dem Nassschichtdickenkamm ermittelt. Man kann beispielsweise mit dem Kamm die Schichtdicke bestimmen, indem man die Beschichtung an den Endmarken des Kamms solange wegkratzt, bis der Untergrund zum Vorschein kommt. An den Markierungen der Zähne kann man dann die Schichtdicke ablesen. Man kann stattdessen auch die Naßschichtdicke im abgematteten Zustand nach DIN EN ISO 2808 messen, wobei dann die Trockenschichtdicke 70 bis 80% der Dicke der abgematteten Schicht beträgt. Eine "abgemattete" Schicht ist eine nicht mehr fließfähige Schicht, in der der Lösungsmittelanteil so stark reduziert ist, so dass die Oberfläche keinen Glanz mehr aufweist.

Falls die Gießform mit einer Grundschicht und einer Deckschicht beschichtet werden soll, umfasst das erfindungsgemäße Verfahren die folgenden Schritte:
(i) Bereitstellen einer Gießform, die eine Oberfläche umfasst, die einen Gießhohlraum definiert,
(ii) Bereitstellen einer erfindungsgemäßen Schlichtezusammensetzung;
(iii) Aufbringen einer Schicht der Grundschicht auf mindestens einen Teil der Oberfläche, die den Gießhohlraum definiert und ggf. Trocknen der Grundschicht; und
(iv) Aufbringen einer Schicht der Deckschicht auf mindestens einen Teil der Oberfläche, die den Gießhohlraum definiert und/oder auf die Schicht der Grundschicht (bevorzugt auf die Schicht der Grundschicht); und
(v) Trocknen der Deckschicht und (sofern noch nicht vollständig getrocknet) der Grundschicht

Die erfindungsgemäße Schlichtezusammensetzung wird als Grundschicht und/oder als Deckschicht (bevorzugt als Deckschicht) verwendet. Falls die erfindungsgemäße Schlichtezusammensetzung sowohl als Grundschicht und als Deckschicht verwendet wird, sind die Schlichtezusammensetzungen der Grundschicht und der Deckschicht gleich oder verschieden (bevorzugt verschieden).

Die Trockenschichtdicke der Grundschicht beträgt bspw. etwa 0,01 mm bis etwa 1 mm, bevorzugt etwa 0,05 mm bis etwa 0,8 mm, stärker bevorzugt etwa 0,1 mm bis etwa 0,6 mm und am meisten bevorzugt etwa 0,2 mm bis etwa 0,3 mm.

Die Trockenschichtdicke der Deckschicht beträgt bspw. etwa 0,01 mm bis etwa 1 mm, bevorzugt etwa 0,05 mm bis etwa 0,8 mm, stärker bevorzugt etwa 0,1 mm bis etwa 0,6 mm und am meisten bevorzugt etwa 0,2 mm bis etwa 0,3 mm.

Sofern die erfindungsgemäße Schlichtezusammensetzung nicht als Grundschicht verwendet wird, kann jede konventionelle Grundschicht eingesetzt werden. Die Grundschicht kann als Grundstoffe z.B. Tone, Talkum, Quarz, Glimmer, Zirkonsilikat, Magnesit, Aluminiumsilikat, und Schamotte enthalten. Diese Grundstoffe sind der zweckbestimmende Anteil der Grundschicht. Sie überdecken die Gießformoberfläche, schließen die Sandporen gegen das Eindringen des Gießmetalls ab und dienen u.a. auch als thermische Isolierung gegenüber der Gießform. Als Grundschicht können sowohl Wasserschlichten als auch Alkoholschlichten verwendet werden.

Erfindungsgemäß beschichtete Gießformen werden bevorzugt für die Herstellung von Metallkörpern eingesetzt. Sie sind besonders zur Herstellung von Motoren- und Motorkomponenten, Bremsscheiben, Turbolader, Abgaskrümmer und allgemeine Maschinenkomponenten geeignet.

Bei einem Gießverfahren wird eine erfindungsgemäß beschichtete Gießform bereitgestellt, flüssiges Metall eingefüllt und die Gießform nach dem Erhärten des Metalls entfernt.

Die folgenden Beispiele erläutern die Erfindung, ohne diese einzuschränken.

### BEISPIELE

### Beispiel 1

Eine Schlichtezusammensetzung zur Beschichtung einer Gießform wurde wie folgt erhalten: Ton (Kärlicher Blauton gelbbrennend T7001 KTS, Kärlicher Ton und Schamottewerke Mannheim GmbH & Co.KG, 56218 Mülheim-Kärlich, Deutschland; Chemische Analyse, in Massen-% geglüht: SiO₂ 53,66, Al₂O₃ 36 bis 38, TiO₂ 3,75, Fe₂O₃ 2,98, CaO 0,73, MgO 0,63, K₂O 0,75, Na₂O 0,07; Sedimentationsanalyse mittels Sedigraphmessung in Masse-%: <2,0 µm 95,7, Mineralanalyse in Masse-%: Kaolinit 70 bis 75, Illit 7,0, Montmorillonit 15 bis 20, Quarz 2,0, Fe-Ti-Minerale 3,0), Glimmer (Fa. Georg H. Luh GmbH, 65396 Walluf, Deutschland; chemische Analyse in Massen-%: SiO₂ 43 bis 46, Al₂O₃ 33 bis 37, Fe₂O₃ 2 bis 5, K₂O 9 bis 11; Siebanalyse Durchgang durch Sieb 60 µm: 25 bis 64 %), und Graphit (Fa. Georg H. Luh GmbH, 65396 Walluf, Deutschland; C-Gehalt min. 85 %, Asche max. 15 %; Kornverteilung bestimmt nach Lasermessmethode: D10 15 bis 30 µm, D50 80 bis 120 µm, D90 190 bis 250 µm) wurden mit einem Premix bestehend aus 1 Gewichtsteil Attapulgit (Attagel 40 von BASF, 67063 Ludwigshafen, Deutschland), 2 Gewichtsteilen Polyvinylalkoholbindemittel (Polyviol, Wacker AG, 81737 München, Deutschland), 0,2 Gewichtsteilen Netzmittel bestehend aus nichtionischem Tensid (Surfynol 440, Evonik Corporation Allentown, PA 18195, US), 0,2 Gewichtsteilen Entschäumer (Finasol, Total Deutschland GmbH, 10117 Berlin, Deutschland), 0,2 % Biozidwirkstoff (Acticide MBS (BIT, MIT) von Thor GmbH, 67346 Speyer, Deutschland) und 60 Gewichts-% Wasser angemischt und mit zusätzlichem Wasser auf ca. 13 s DIN 4 mm in der Viskosität eingestellt.

Formkörper der Abmessungen 240mm L × 20mm B × 15mm H wurden aus Sand H32 von der Quarzwerke Gruppe mit 0,4% ASKOCURE 388 und 0,4% ASKOCURE 666 durch Aminbegasung hergestellt.

Anschließend wurde die verdünnte Schlichte nach Aufrühren in einen 250ml Standzylinder gefüllt und die Formkörper 5s von Hand getaucht und anschließend im Trockenofen bei 120°C getrocknet. Es ergab sich eine Trockenschichtdicke von etwa 300 bis 400 µm.

Die getrockneten Kerne wurden an den Kernmarken und der Spiegelfläche durch Abreiben von der Schlichte befreit, damit keine Druckspannung entsteht und in eine vertikal geteilte Stapelform mit 3 horizontalen Plätzen für Kerne aus Wasserglas / Ester gehärtetem Sand H32 mittels ASKOBOND RAPID A verklebt. Nach dem Zulegen und Verspannen des Formpaketes mittels Schraubzwingen wurden die Abgüsse bei 1420°C mit Grauguss GJL 200 vorgenommen.

Nach dem Abkühlen und Auspacken der Gussteile wurden diese mit einem Spatel und einer Drahtbürste äußerlich von anhaftendem Sand befreit. Danach wurde mit einem Pressluftmeißel an einer markierten Stelle 10 Sekunden mit 6 bar der Sandkern ausgerüttelt.

Anschließend wurde mittels einer Luftpistole mit 7 bar Druck der Hohlraum des Kerns ausgeblasen, so dass die meiste Schlichte mit abgeblasen wurde. Zum Schluss wurde der verbliebene Schmutz im Hohlraum mit einer schmalen Drahtbürste und Schraubenzieher entfernt und nach Entfernen metallischer Teile mittels Magneten ausgewogen.

### Beispiel 2

Weitere erfindungsgemäße Schlichtezusammensetzungen wurden, wie im Beispiel 1 beschrieben, erhalten, mit dem Unterschied, dass die Anteile der Feststoffkomponente wie in Tabelle 1 beschrieben mit dem in Beispiel 1 verwendeten Premix angemischt wurden. Die so erhaltenen Formkörper wurden wie in Beispiel 1 hinsichtlich Rückstand und Blattrippen untersucht.

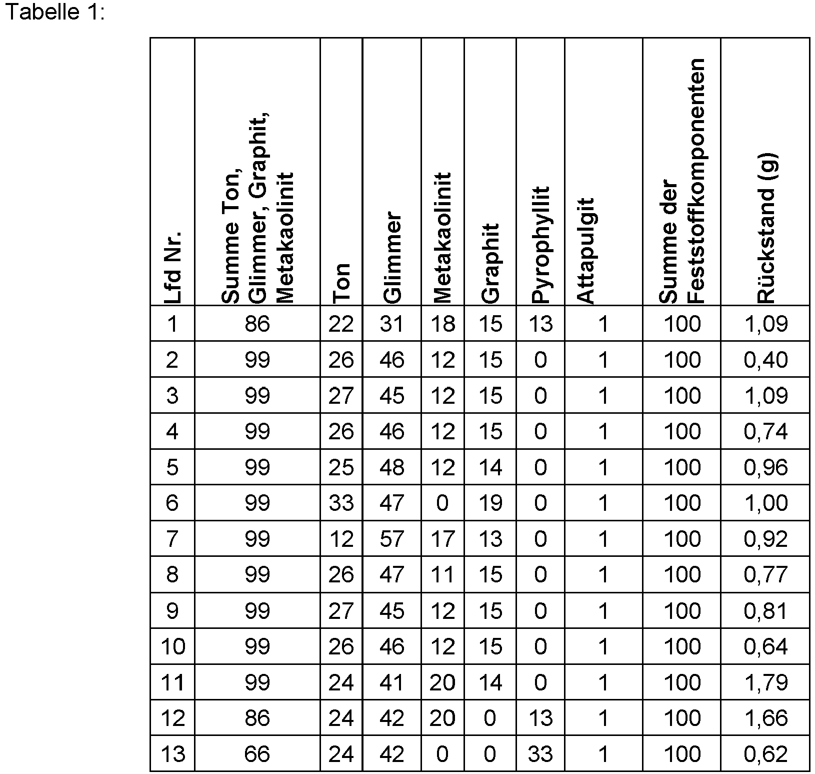

### Beispiel 3 (erfindungsgemäß)

Es wurde wie oben beschrieben eine Schlichtezusammensetzung mit folgender Zusammensetzung aufgetragen und hinsichtlich des Rückstandes sowie des Vorhandenseins von Blattrippen sowie Penetrationen charakterisiert:

| | |
|---|---|
| Wasser | 65,5 Gew.-% |
| Glimmer (Muskovit, D50 = 90µm) | 16,0 Gew.-% |
| Graphit (D50 = 70µm) | 5,0 Gew.-% |
| Kärlicher Blauton T 7001 | 10,0 Gew.-% |
| Polyvinylalkohol Lösung 25%ig | 1,5 Gew.-% |
| Attapulgit | 1,0 Gew.-% |
| Biozidwirkstoff, Netzmittel und Entschäumer | 1,0 Gew.-% |

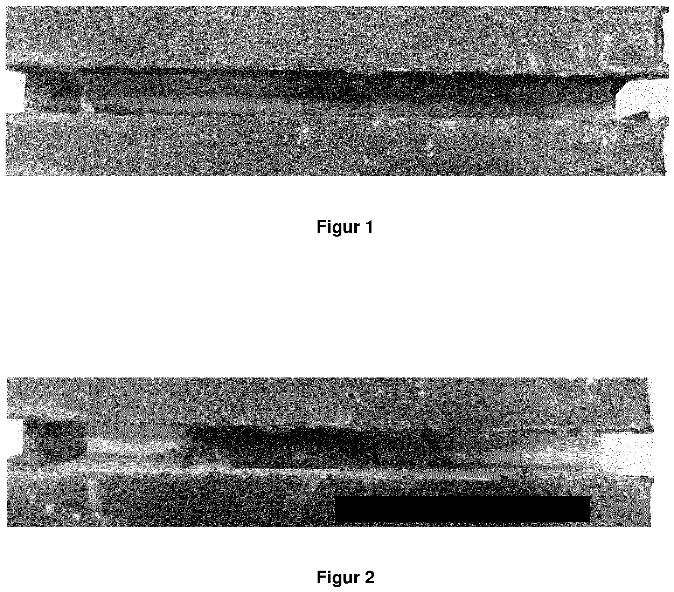

Hierbei wurde beim Formkörper 2 ein Rückstand von nur 0,40 g bestimmt. Wie zudem anhand von Figur 1 ersichtlich ist, zeigt der Formkörper keinerlei Blattrippen oder Penetrationen. Die Schlichte ließ sich gut von den Gussteilen entfernen und hinterließ einen geringen Rückstand.

### Beispiel 4 (nicht erfindungsgemäß)

Verglichen wurde hierbei mit einer Schlichtezusammensetzung folgender nicht erfindungsgemäßen Zusammensetzung, die im Automobilguss üblich ist:

| | |
|---|---|
| Wasser | 49,5 Gew.-% |
| Pyrophyllit (D50= 60µm) | 45,0 Gew.-% |
| Eisenoxid (D50= 2µm) | 2,0 Gew.-% |
| Polyvinylalkohol Lösung 25%ig | 1,5 Gew.-% |
| Attapulgit | 1,0 Gew.-% |
| Biozidwirkstoffe, Netzmittel und Entschäumer | 1,0 Gew.-% |

### Beispiel 5 (nicht erfindungsgemäß)

Weitere nicht erfindungsgemäße Schlichtezusammensetzungen wurden, wie im Beispiel 1 beschrieben, erhalten, mit dem Unterschied, dass die Anteile der Feststoffkomponente wie in Tabelle 2 beschrieben mit dem in Beispiel 1 verwendeten Premix angemischt wurden. Die so erhaltenen Formkörper wurden wie in Beispiel 1 hinsichtlich Rückstand und Blattrippen untersucht.

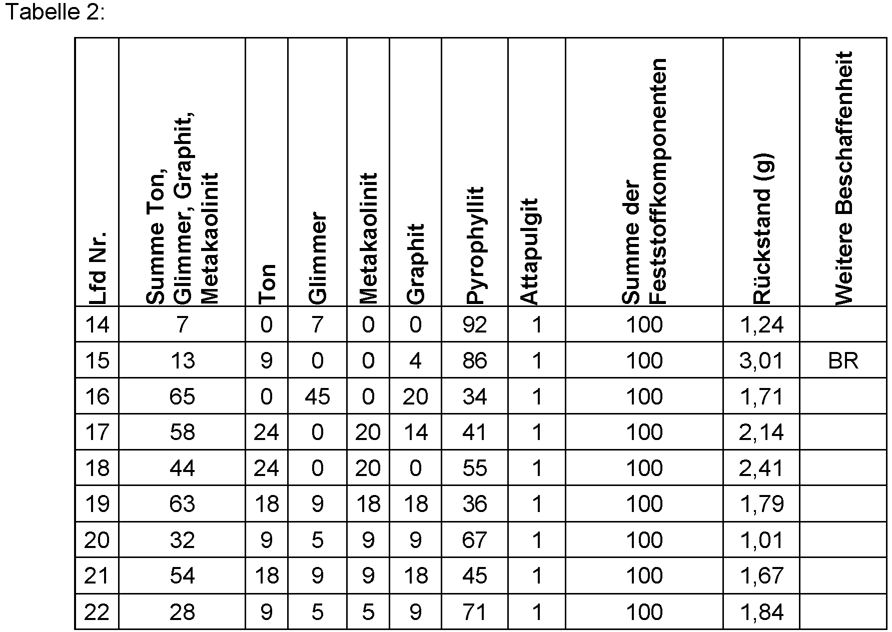

Hierbei wurde beim Formkörper 15 ein hoher Rückstand von 3,01 g bestimmt. Wie zudem anhand von Figur 2 ersichtlich ist, zeigt der Formkörper 15 merkliche Blattrippen (BR).

Die Formkörper 14 bis 22 sind Vergleichsbeispiele.

### Physikalische Eigenschaften der Schlichtezusammensetzung:

Es wurden Proben der oben beim Gießtest aufgeführten Schlichtezusammensetzungen getrocknet, gemörsert und in Porzellanschiffchen gefüllt und anschließend in einem 1300°C bzw. 1450°C vorgeheizten Ofen eingeführt und für 3 Minuten erhitzt. Anschließend wurde das Sinterverhalten optisch verglichen.

Insbesondere die pyrophyllithaltigen Schlichten zeigten ein kompaktes Bild, während die erfindungsgemäßen Schlichten wie aufgeschäumt aussahen.

Es wird vermutet, dass ein deutlich besseres Abschälen der Schlichte nach dem Abguss und damit ein geringerer Restschmutz durch das Aufschäumen der Schlichtezusammensetzung während des Sinterns bewirkt wird.

## Patentansprüche

1. Eine Schlichtezusammensetzung, umfassend eine Feststoffkomponente, die einen Ton und Glimmer umfasst, wobei der Ton von etwa 50 bis etwa 90 Gewichts-% Kaolinit und von etwa 5 bis etwa 35 Gewichts-% Montmorillonit umfasst, wobei die Schlichtezusammensetzung, bezogen auf die Feststoffkomponente, etwa 5 bis etwa 50 Gewichtsteile Ton und etwa 10 bis etwa 80 Gewichtsteile Glimmer umfasst, wobei das Verhältnis von Glimmer zu Ton etwa 1:1 bis etwa 5:1 (Gew./Gew.) beträgt.

2. Die Schlichtezusammensetzung gemäß Anspruch 1, wobei die Schlichtezusammensetzung, bezogen auf die Feststoffkomponente, etwa 20 bis etwa 70 Gewichtsteile und bevorzugt etwa 30 bis etwa 65 Gewichtsteile Glimmer umfasst.

3. Die Schlichtezusammensetzung gemäß Anspruch 1 oder 2, wobei das Verhältnis von Glimmer zu Ton etwa 1,3:1 bis etwa 3:1, bevorzugt etwa 1,4:1 bis etwa 2,5:1 (Gew./Gew.) beträgt.

4. Die Schlichtezusammensetzung gemäß einem der Ansprüche 1 bis 3, wobei die Feststoffkomponente ferner Metakaolinit und/oder Graphit umfasst.

5. Die Schlichtezusammensetzung gemäß einem der Ansprüche 1 bis 4, wobei die Summe aus Ton, Glimmer, Metakaolinit und Graphit, bezogen auf die Feststoffkomponente, etwa 20 bis etwa 100 Gew.-%, bevorzugt etwa 25 bis etwa 100 Gew.-% und besonders bevorzugt etwa 30 bis etwa 100 Gew.-% beträgt.

6. Die Schlichtezusammensetzung gemäß einem der Ansprüche 1 bis 5, wobei die Schlichtezusammensetzung, bezogen auf die Feststoffkomponente, etwa 5 bis etwa 40 Gewichtsteile und bevorzugt etwa 5 bis etwa 35 Gewichtsteile Ton umfasst.

7. Die Schlichtezusammensetzung gemäß einem der Ansprüche 1 bis 6, wobei die Schlichtezusammensetzung, bezogen auf die Feststoffkomponente, etwa 0 bis etwa 35 Gewichtsteile, bevorzugt etwa 0 bis etwa 30 Gewichtsteile und besonders bevorzugt etwa 0 bis etwa 25 Gewichtsteile Metakaolinit umfasst.

8. Die Schlichtezusammensetzung gemäß einem der Ansprüche 1 bis 7, wobei die Schlichtezusammensetzung, bezogen auf die Feststoffkomponente, etwa 0 bis etwa 30 Gewichtsteile, bevorzugt etwa 0 bis etwa 25 Gewichtsteile und besonders bevorzugt etwa 0 bis 20 Gewichtsteile Graphit umfasst.

9. Die Schlichtezusammensetzung gemäß einem der Ansprüche 1 bis 8, wobei die Schlichtezusammensetzung ferner eine Trägerflüssigkeit umfasst, wobei die Trägerflüssigkeit Wasser umfasst.

10. Ein Verfahren zur Beschichtung einer Gießform, wobei das Verfahren die Schritte umfasst:
(a) Bereitstellen einer Gießform, die eine Oberfläche umfasst, die einen Gießhohlraum definiert,
(b) Bereitstellen einer Schlichtezusammensetzung gemäß einem der Ansprüche 1 bis 9;
(c) Aufbringen einer Schicht der Schlichtezusammensetzung auf mindestens einen Teil der Oberfläche, die den Gießhohlraum definiert; und
(d) Trocknen der Schlichtezusammensetzung.

11. Verwendung einer Schlichtezusammensetzung gemäß einem der Ansprüche 1 bis 9 zur Beschichtung einer Gießform, wobei die Gießform eine Oberfläche umfasst, die einen Gießhohlraum definiert, und eine Schicht der Schlichtezusammensetzung auf mindestens einen Teil der Oberfläche, die den Gießhohlraum definiert, aufgebracht wird.

12. Eine beschichtete Gießform, erhältlich nach dem Verfahren gemäß Anspruch 10.

## Claims

1. A coating composition comprising a solid component comprising a clay and mica, wherein the clay comprises from about 50 to about 90% by weight of kaolinite and from about 5 to about 35% by weight of montmorillonite and the coating composition comprises, based on the solid component, from about 5 to about 50 parts by weight of clay and about 10 to 80 parts by weight of mica, wherein the ratio of mica to clay is from about 1:1 to about 5:1 (weight/weight).

2. The coating composition according to claim 1, wherein the coating composition comprises, based on the solid component, from about 20 to about 70 parts by weight and preferably from about 30 to about 65 parts by weight, of mica.

3. The coating composition according to claim 1 or 2, wherein the ratio of mica to clay is from about 1.3:1 to about 3:1, preferably from about 1.4:1 to about 2.5:1 (weight/weight).

4. The coating composition according to any one of claims 1 to 3, wherein the solid component further comprises metakaolinite and/or graphite.

5. The coating composition according to any one of claims 1 to 4, wherein the sum of clay, mica, metakaolinite and graphite is, based on the solid component, from about 20 to about 100% by weight, preferably from about 25 to about 100% by weight and particularly preferably from about 30 to about 100% by weight.

6. The coating composition according to any one of claims 1 to 5, wherein the coating composition comprises, based on the solid component, from about 5 to about 40 parts by weight and preferably from about 5 to about 35 parts by weight, of clay.

7. The coating composition according to any one of claims 1 to 6, wherein the coating composition comprises, based on the solid component, from about 0 to about 35 parts by weight, preferably from about 0 to about 30 parts by weight and particularly preferably from about 0 to about 25 parts by weight, of metakaolinite.

8. The coating composition according to any one of claims 1 to 7, wherein the coating composition comprises, based on the solid component, from about 0 to about 30 parts by weight, preferably from about 0 to about 25 parts by weight and particularly preferably from about 0 to 20 parts by weight, of graphite.

9. The coating composition according to any one of claims 1 to 8, wherein the coating composition further comprises a carrier liquid, wherein the carrier liquid comprises water.

10. A process for coating a casting mold, wherein the process comprises the steps of:
(a) providing a casting mold comprising a surface which defines a casting cavity,
(b) providing a coating composition according to any one of claims 1 to 9;
(c) application of a layer of the coating composition to at least one part of the surface which defines the casting cavity; and
(d) drying the coating composition.

11. The use of a coating composition according to any one of claims 1 to 9 for coating a casting mold, wherein the casting mold comprises a surface which defines a casting cavity and a layer of the coating composition is applied to at least part of the surface which defines the casting cavity.

12. A coated casting mold obtainable by the process according to claim 10.

## Revendications

1. Composition de poteyage, comprenant un composant solide, qui comprend une argile et du mica, dans laquelle l'argile comprend d'environ 50 à environ 90 % en poids de kaolinite et d'environ 5 à environ 35 % en poids de montmorillonite, dans laquelle la composition de poteyage, par rapport au composant solide, comprend d'environ 5 à environ 50 parties en poids d'argile et d'environ 10 à environ 80 parties en poids de mica, le rapport du mica sur l'argile étant d'environ 1/1 à environ 5/1 (poids/poids).

2. Composition de poteyage selon la revendication 1, dans laquelle la composition de poteyage, par rapport au composant solide, comprend d'environ 20 à environ 70 parties en poids et de préférence d'environ 30 à environ 65 parties en poids de mica.

3. Composition de poteyage selon la revendication 1 ou 2, dans laquelle le rapport du mica sur l'argile est d'environ 1,3/1 à environ 3/1, de préférence d'environ 1,4/1 à environ 2,5/1 (poids/poids).

4. Composition de poteyage selon l'une des revendications 1 à 3, dans laquelle le composant solide comprend en outre de la métakaolinite et/ou du graphite.

5. Composition de poteyage selon l'une des revendications 1 à 4, dans laquelle la somme de l'argile, du mica, de la métakaolinite et du graphite, par rapport au composant solide, est d'environ 20 à environ 100 % en poids, de préférence d'environ 25 à environ 100 % en poids et de manière particulièrement préférée d'environ 30 à environ 100 % en poids.

6. Composition de poteyage selon l'une des revendications 1 à 5, dans laquelle la composition de poteyage, par rapport au composant solide, comprend d'environ 5 à environ 40 parties en poids et de préférence d'environ 5 à environ 35 parties en poids d'argile.

7. Composition de poteyage selon l'une des revendications 1 à 6, dans laquelle la composition de poteyage, par rapport au composant solide, comprend d'environ 0 à environ 35 parties en poids, de préférence d'environ 0 à environ 30 parties en poids et de manière particulièrement préférée d'environ 0 à environ 25 parties en poids de métakaolinite.

8. Composition de poteyage selon l'une des revendications 1 à 7, dans laquelle la composition de poteyage, par rapport au composant solide, comprend d'environ 0 à environ 30 parties en poids, de préférence d'environ 0 à environ 25 parties en poids et de manière particulièrement préférée d'environ 0 à 20 parties en poids de graphite.

9. Composition de poteyage selon l'une des revendications 1 à 8, dans laquelle la composition de poteyage comprend en outre un liquide support, le liquide support comprenant de l'eau.

10. Procédé pour le revêtement d'un moule de coulée, le procédé comprenant les étapes consistant à :
(a) mettre à disposition un moule de coulée comportant une surface qui définit une cavité de coulée,
(b) mettre à disposition une composition de poteyage selon l'une des revendications 1 à 9 ;
(c) appliquer une couche de la composition de poteyage sur au moins une partie de la surface qui définit la cavité de coulée ; et
(d) sécher la composition de poteyage.

11. Utilisation d'une composition de poteyage selon l'une des revendications 1 à 9 pour le revêtement d'un moule de coulée, dans laquelle le moule de coulée comporte une surface qui définit une cavité de coulée, et une couche de la composition de poteyage est appliquée sur au moins une partie de la surface, qui définit la cavité de coulée.

12. Moule de coulée revêtu, pouvant être obtenu d'après le procédé selon la revendication 10.
